# EUROPÄISCHE PATENTSCHRIFT

(11) **EP 3 799 954 B1**
(45) Veröffentlichungstag und Bekanntmachung des Hinweises auf die Patenterteilung: **17.01.2024**
(21) Anmeldenummer: 20199609.7
(22) Anmeldetag: 01.10.2020
(51) Int. Cl.: B01J 19/26, B01J 19/00, B01J 8/14, B01J 19/18, B01J 19/24

(54) **VORRICHTUNG, SYSTEM UND VERFAHREN ZUR REDUZIERUNG EINER OBERFLÄCHENSPANNUNG UND/ODER EINER VISKOSITÄT EINES FLUIDS**
DEVICE, SYSTEM AND METHOD FOR REDUCING A SURFACE TENSION AND / OR A VISCOSITY OF A FLUID
DISPOSITIF, SYSTÈME ET PROCÉDÉ DE RÉDUCTION D'UNE TENSION DE SURFACE ET/OU D'UNE VISCOSITÉ D'UN FLUIDE

(30) Priorität: 04.10.2019 DE 102019126786; 04.10.2019 DE 202019105497 U
(43) Veröffentlichungstag der Anmeldung: 07.04.2021
(73) Patentinhaber: SQW Sauerländer Quality Water GmbH & Co. KG, 59757 Arnsberg (DE)
(72) Erfinder: Lehmann, Jörg, 01723 Kesselsdorf (DE); Schulte Müller, Carsten, 59757 Arnsberg (DE); Huchtmeier, Michael, 59757 Arnsberg (DE)
(74) Vertreter: LS-MP von Puttkamer Berngruber Loth Spuhler

(56) Entgegenhaltungen:
- EP-A1- 1 294 474
- EP-B1- 1 294 474
- WO-A1-2019/002385
- WO-A2-2014/184585
- US-A1- 2004 099 614
- US-A1- 2011 003 370
- US-A1- 2012 097 280

## Beschreibung

Die Erfindung betrifft eine Vorrichtung zur Reduzierung einer Oberflächenspannung und/oder einer Viskosität eines Fluids nach den Merkmalen des Anspruchs 1.

Die Erfindung betrifft weiter ein System zur Reduzierung einer Oberflächenspannung und/oder einer Viskosität eines Fluides nach den Merkmalen des Anspruchs 25 sowie ein Verfahren zur Reduzierung einer Oberflächenspannung und/oder einer Viskosität eines Fluides nach den Merkmalen des Anspruchs 26.

Aus der EP1 294 474 B2 ist ein Verfahren zur physikalischchemischen Behandlung fluider Medien bekannt. Es sind zwei Volumenströme eines fluiden Mediums vorgesehen, die durch ein Gehäuse mit einer rotationssymmetrischen, im Längsschnitt herzförmigen Reaktionskammer geführt werden. Die Reaktionskammer umfasst einen Medienzufluss und einen Medienabfluss. Die Reaktionskammer ist als Lavaldüse ausgestaltet.

Die WO 2019/002385 A1 betrifft eine Vorrichtung, mit der ein Zielmedium mit einem Trägerfluid in Kontakt gebracht wird. Dieser Prozess erfordert einen intensiven Grenzflächenimpuls sowie einen Massen- und/oder Energieaustausch zwischen dem Trägerfluid und dem Zielmedium. Die Vorrichtung umfasst dabei eine Kammer, die eine Umfangswand, eine Bodenwand sowie eine obere Wand aufweist. Auf diese Weise bildet die Kammer eine Umhüllung um das Zielmedium.

Die US 2011/003370 A1 offenbart ein Verfahren zur Entfernung von Verunreinigungen aus Triacylglycerol-öl, das die folgenden Schritte umfasst: Mischen des Öls mit einem Fluid zur Bildung einer Fluidmischung aus einer Ölphase und einer Wasserphase. Pumpen der Fluid-Öl Mischung durch eine Kavitationsvorrichtung. Erzeugen einer hydrodynamischen Kavitation in der Kavitationsvorrichtung durch Pumpen der Fluid-Öl Mischung durch die Kavitationsvorrichtung. An den Innenwänden einer hydrodynamischen Kavitationsvorrichtung sind herausnehmbare Einsätze (removable insert) vorgesehen, auf denen die Reagenzien, Oxyde, Nitride, Keramiken oder Kunststoffe festgelegt werden können.

Die US 2004/099614 A1 offenbart ein Verfahren zur physikalischchemischen Behandlung fluider Medien. Es ist ein Gehäuse vorgesehen, das einen rotationssymmetrischen und im Längsschnitt herzförmigen Hohlraum umfasst, der als Reaktionskammer dient. Das Gehäuse weist im oberen Teil des Hohlraums eine zentral angeordnete Bohrung auf. Die Bohrung ist in Richtung der Längsachse des Hohlraumes durch die Wandung des Gehäuses hindurchgeführt.

Aus der WO 2014/184585 A2 ist ein System zum Erzeugen von feinen Bläschen bekannt, das einen Fluidinput und einen Fluidoutput umfasst. Zusätzlich ist wenigstens ein Gasinput vorgesehen. Darüber hinaus ist eine Vielzahl von Erzeugern feiner Bläschen angeordnet, wobei die Erzeuger feiner Bläschen zwischen dem Fluidinput und Fluidoutput angeordnet sind.

Die US 2012/097280 A1 offenbart einen Wirbelgenerator, der einen Einlassabschnitt aufweist, der einen Wirbel in einem Fluid erzeugt. Der Wirbelgenerator weist eine Wirbelkammer auf, die einen trompetenförmigen inneren Längsquerschnitt hat. Am Ende der Wirbelkammer ist ein Fluidauslass definiert. Es ist weiter ein Verbindungsabschnitt vorgesehen, der eine zylindrische Form definiert, die an den Einlassabschnitt angrenzt.

Bekannte Verfahren aus dem Stand der Technik erweisen sich vielfach als nachteilig, da die Verfahren oftmals auf der Erzeugung einer Art von Wasserwirbeln beruhen, die nur unter sehr hohem Energieaufwand herstellbar sind.

Weitere Nachteile bekannter Verfahren liegen vielfach darin, dass ein Entlangführen von Wassersäulen an Rohrwänden häufig zu erheblichen energetischen Verlusten führt. Insbesondere bei sehr kleinen Rohrdurchmessern und/oder auch bei dem Einsatz von Vortex-Rohren kommt es nicht selten zu Druckverlusten bis zu 70 %.

Zur Vermeidung derartiger Nachteile wird eine Vorrichtung sowie ein zugehöriges System zur Reduzierung einer Oberflächenspannung und/oder einer Viskosität eines Fluids mit einem Gehäuse bereitgestellt, das wenigstens einen Zulauf und einen Ablauf für das Fluid umfasst.

Das Gehäuse weist in seinem Inneren eine, vom Fluid durchströmbare Drallkammer auf.

Die Drallkammer ist zwischen dem Zulauf und dem Ablauf des Fluids positioniert, wobei im Inneren der Drallkammer wenigstens ein Führungselement angeordnet ist, mit dem das Fluid in einem Fluidstrom aus einer axialen Strömungsrichtung in eine radiale Strömungsrichtung überführbar ist. Wobei der Fluidstrom einem Drehimpuls um die Drehachse des Fluidstroms aussetzbar ist.

An einem stromabwärtigen Ende des Führungselements ist ein Drallzapfen angeordnet, der den sich um seine Drehachse drehenden Fluidstrom bei der Überführung in eine Wirbelströmung unterstützt.

Die Drallkammer und/oder das Führungselement weisen wenigstens eine, dem Fluid zugewandte Wand auf.

Die Wand des Fuhrungselements und/oder die Wand der Drallkammer umfasst jeweils wenigstens eine, die Reibung der Wand gegenüber dem Fluidstrom verringernde Struktur.

Der Ablauf für das Fluid in Richtung des Fluidstroms ist zumindest bereichsweise verengt.

Die Nachteile werden weiter mittels eines Verfahrens gelöst, das der Reduzierung einer Oberflächenspannung und/oder einer Viskosität eines Fluids dient. Das Verfahren basiert auf einem Gehäuse mit einem Zulauf und einem Ablauf, die vom Fluid durchströmt werden.

Das Fluid durchströmt weiter eine im Inneren des Gehäuses angeordnete Drallkammer, wobei die Drallkammer zwischen dem Zulauf und dem Ablauf für das Fluid positioniert ist.

Im Inneren der Drallkammer ist wenigstens ein Führungselement angeordnet, mit dessen Hilfe das Fluid aus einer axialen Strömungsrichtung in eine radial Strömungsrichtung des Fluids überführt wird.

Die Drallkammer und/oder das Führungselement umfassen jeweils wenigstens eine, dem Fluid zugewandte Wand.

Die Wand umfasst wenigstens eine Struktur, mit der die Reibung der jeweiligen Wand gegenüber dem Fluidstroms verringert wird.

Der Ablauf für das Fluid wird in Richtung der Strömung des Fluids zumindest bereichsweise verengt.

### Fluid

Die Erfindung versteht unter dem Begriff "Fluid" wenigstens eine Substanz, die sich unter Einwirkung von Scherkräften kontinuierlich verformt bzw. fließt. Im Folgenden wird Begriff "Fluid" und "Fluidstrom" gleichwertig verwendet.

Es versteht sich von selbst, dass unter dem Begriff "Fluid" Flüssigkeiten, Gase, Plasma, Suspensionen und/oder Aerosole zu verstehen sind. In der Regel kommen Fluide in einem flüssigen oder einem gasförmigen Aggregatszustand vor.

Im Weiteren wird rein beispielhaft und in keiner Weise ausschließlich davon ausgegangen, dass es sich bei dem Fluid um eine Flüssigkeit handelt.

Der Begriff Fluid stammt von dem lateinischen Wort "fluidus" und bedeutet zu Deutsch "fließend".

Nach einer anderen Definition versteht die Erfindung unter dem Begriff "Fluid" eine Substanz, die sich unter dem Einfluss von Scherkräften kontinuierlich verformt, also fließt. Ihr Schubmodul ist dabei Null.

Es versteht sich von selbst, dass viele physikalische Gesetze in Bezug auf ein Fluid sowohl für Gase als auch für Flüssigkeiten gleichermaßen gelten.

Gase und Flüssigkeiten unterscheiden sich in Bezug auf den Begriff "Fluid" quantitativ, also in der Größenordnung des Effekts und nicht qualitativ.

Unter einem "Fluidstrom" ist ein zwangsgeführter Volumenstrom aus Fluiden zu verstehen. Wie bereits vorausgehend ausgeführt, kann das Fluid eine Flüssigkeit, ein Gas oder ein Flüssigkeits-Gas-Gemisch sein.

### Oberflächenspannung und Viskosität des Fluids

Bei einer "Oberflächenspannung" eines Fluids handelt es sich um eine Eigenschaft der Oberfläche (Grenzfläche) zwischen dem Fluid und einem Gas, wie z. B. etwa der Luft.

Die Oberflächenspannung eines Fluids verhält sich rein beispielhaft etwa vergleichbar mit einer gespannten elastischen Folie.

In Bezug auf den Begriff der "Oberflächenspannung" bildet das Fluid, nicht aber ein Gas, eine freie Oberfläche.

Bei der Oberflächenspannung eines Fluids wirken Anziehungskräfte zwischen den Molekülen des Fluids (z. B. Wasser) aus allen Richtungen aufeinander ein. Insgesamt addieren sich die Anziehungskräfte je Molekül zu Null.

An der Oberfläche des Fluids (z. B. Wasser) wirken die Anziehungskräfte nicht nach oben in Richtung der Luft. Da zwischen dem Wassermolekül und dem z. B. Sauerstoffmolekül der Luft keine Anziehungskräfte bestehen, richtet sich somit lediglich eine Kraft ins Innere des Fluids hinein.

Eine weitere Definition des Begriffs "Fluid" entstammt der Strömungslehre. Hiernach ist ein Fluid jede Substanz, die gegenüber einer genügend langsamen Scherung keinen Widerstand entgegensetzt. Danach hat das Fluid somit eine endliche Viskosität.

Unter der "Viskosität" eines Fluids ist im vorliegenden Fall das Maß für die Zähflüssigkeit des Fluids zu verstehen. In der Umkehrung der Viskosität ist die Fluidität als ein Maß für die Fließfähigkeit des jeweiligen Fluids zu verstehen.

Viskoelastische Stoffe sind somit ein Sonderfall von Flüssigkeiten (Fluiden). Ein derartiger viskoelastischer Stoff verhält sich unter bestimmten Umständen wie ein elastischer Feststoff.

Moleküle hochviskoser Fluide sind stärker aneinandergebunden und somit gegeneinander weniger beweglich. Dieser Zustand wird in Bezug auf die Viskosität auch als "innere Reibung" bezeichnet.

Bei Fluiden mit vergleichsweise niedriger Viskosität, wie z. B. bei Luft und Wasser, ist die Fließgeschwindigkeit bei einer größeren Wirbelströmung im Zentrum am größten. Die Fließgeschwindigkeit nimmt dagegen bei der Wirbelströmung proportional zum Abstand vom Zentrum der Wirbelströmung wieder ab. Auf die Wirbelströmung wird weiter unten im Detail eingegangen.

### Drallkammer mit Zufluss und Abfluss

Die Erfindung versteht unter dem Begriff "Drallkammer" wenigstens einen Hohlraum in einem Gehäuse mit wenigstens einem Zulauf und einem Ablauf.

Das Gehäuse kann aus wenigstens einem Metall und/oder aus wenigstens einem Kunststoff gefertigt sein.

Zur Aufnahme eines Fluidstroms in die Drallkammer umfasst das Gehäuse in stromaufwärtiger Richtung des Fluidstroms einen Zulauf.

Nach Durchströmen der Drallkammer durch den Fluidstrom wird der Fluidstrom durch den Ablauf aus der Drallkammer des Gehäuses abgeführt.

Der Zulauf und der Ablauf können axial oder radial zur Längsachse der Drallkammer angeordnet sein. Es versteht sich von selbst, dass der Zulauf und der Ablauf auch in einem anderen Winkel gegenüber der Drallkammer positioniert sein kann.

Die Drallkammer weist eine strömungstechnisch optimierte Geometrie auf, bei der der Fluidstrom einem Drehimpuls um die Drehachse des Fluidstroms ausgesetzt wird. Auf den Drehimpuls wird weiter unten im Detail eingegangen.

Stromabwärts nach dem Zulauf erweitert sich die Drallkammer im Gehäuse vorzugsweise trompetenförmig. Der äußere Rand der Drallkammer weist dabei vorzugsweise einen Durchmesser von mindestens 2 x dem Durchmesser des Zulaufs auf.

Die Drallkammer weist an ihrer, dem Gehäuse zugewandten Außenwand wenigstens einen Außenrand auf, der zur Führung des Fluidstroms ausgebildet ist.

Auf diese Weise kann der Fluidstrom innerhalb der Drallkammer geführt und/oder in wenigstens eine vorbestimmte Richtung geleitet werden.

An die Drallkammer ist ein Zuführungskanal ankoppelbar. Über den Zuführungskanal können Feststoffe, Flüssigkeiten und Gase (z.B. Luft) in die Drallkammer und/oder in den Fluidstrom eingeführt werden.

Am Zuführungskanal ist wenigstens ein Ventil angeordnet, das den Zuführungskanal öffnet oder schließt.

An dem Zuführungskanal kann wenigstens ein Behälter zur Aufnahme der Flüssigkeit oder des Feststoffs oder des Gases, die dem Fluidstrom jeweils zugeführt werden sollen, angebracht werden.

Der Zuführungskanal kann von der Drallkammer entfernt werden.

Die Drallkammer ist zwischen dem Zulauf und dem Ablauf des Gehäuses angeordnet und zur Aufnahme von wenigstens einem Fluid ausgebildet.

Die Drallkammer kann an ihrer, dem Fluidstrom zugeneigten Wand beschichtet sein. Die Wand kann in einer besonderen Art und Weise geglättet und/oder gehärtet sein. Die Wand kann Muster und/oder Strukturen jeglicher Geometrie aufweisen.

Im Weiteren wird in diesem Zusammenhang von Strukturen gesprochen, mit welchen die Wand der Drallkammer versehen ist, die dem Fluidstrom im Inneren der Drallkammer zugewandt ist. Auf die Strukturen wird im Folgenden im Detail eingegangen.

### Führungselement

Im Inneren der Drallkammer ist wenigstens ein Führungselement angeordnet.

Das Führungselement ist insbesondere über Streben und/oder Stege in der Drallkammer des Gehäuses positioniert.

Das Führungselement kann auch auf eine andere Weise, vorzugsweise berührungslos z. B. durch Magnetkraft im Inneren der Drallkammer, positioniert sein.

Das Führungselement ist dazu ausgebildet, den Fluidstrom aus einer axialen Strömungsrichtung , entlang der Längsachse der Drallkammer in eine radiale Strömungsrichtung zu überführen.

Das Führungselement ist im Inneren der Drallkammer angeordnet. Mit dem Führungselement wird das Fluid in einem Fluidstrom aus einer axialen Strömungsrichtung in eine radiale Strömungsrichtung überführt. Hierbei wird der Fluidstrom einem Drehimpuls um die Drehachse des Fluidstroms ausgesetzt.

Die Drehachse des Fluidstroms entspricht einer fiktiven Längsachse des Fluidstroms.

An einem stromabwärtigen Ende des Führungselements ist ein Drallzapfen angeordnet, der den sich um seine Drehachse drehenden Fluidstrom bei der Überführung in eine Wirbelströmung unterstützt.

Hierbei versteht sich von selbst, dass der Drallzapfen und/oder das Führungselement und/oder das Gehäuse der Vorrichtung gegenüber dem Fluid abgedichtet sind. Die Zuführung von Fluid in die Drallkammer erfolgt über den Zulauf. Stromabwärts erfolgt die Abführung des Fluids aus der Drallkammer über den Ablauf.

Die Drallkammer und/oder das Führungselement weisen je wenigstens eine Wand auf, die dem Fluidstrom im Inneren der Drallkammer zugewandt ist. Die Wand der Drallkammer und/oder die Wand des Führungselements, die dem Fluidstrom zugeneigt sind, weisen wenigstens eine Struktur auf, mit der die Reibung der jeweiligen Wand gegenüber dem Fluidstrom verringerbar ist.

Das Führungselement weist einen, sich in Strömungsrichtung des Fluids variierenden Durchmesser auf. Mithilfe des variierenden Durchmessers sind die Drehung des Fluidstroms um die Drehachse des Fluidstroms und der Drehimpuls des Fluidstroms zusätzlich verstärkbar.

Zur Überführung des Fluidstroms in eine radial verlaufende Strömungsrichtung ist das Führungselement vorzugsweise tellerförmig ausgebildet.

Das Führungselement kann darüber hinaus auch jede andere geometrische Form einnehmen.

An seinem stromaufwärtigen Ende ist das Führungselement in Richtung der Längsachse des Gehäuses spitz auslaufend ausgebildet. Das Führungselement ist dadurch zur Teilung des Fluidstroms ausgebildet.

Zur weiteren Führung und/oder Leitung des Fluidstroms weist das Führungselement wenigstens eine innere Auslaufkontur auf. Das Führungselement umfasst zur verbesserten Leitung des Fluidstroms wenigstens eine äußere Auslaufkontur.

Mithilfe der inneren Auslaufkontur und/oder der äußeren Auslaufkontur wird der Fluidstrom im Inneren der Drallkammer in eine radiale Strömungsrichtung überführt.

Die innere Auslaufkontur und/oder die äußere Auslaufkontur verstärken zusätzlich die Drehimpuls des Fluidstroms um seine Drehachse. Auf diese Weise kann sich die Strömungsgeschwindigkeit des sich um seine Drehachse drehenden Fluidstroms noch weiter zu erhöhen. Im Weiteren wird alternativ zum Begriff "Strömungsgeschwindigkeit" auch der Begriff "Fließgeschwindigkeit" verwendet.

Das in strömungsaufwärtiger Richtung spitz auslaufende Ende des Führungselements ist als Teilungszapfen für den Fluidstrom ausgebildet.

Der Teilungszapfen erstreckt sich entlang der Längsachse des Gehäuses. Der Teilungszapfen ist zur Herabsetzung des Strömungswiderstands spitz ausgebildet. Der Teilungszapfen kann auch eine gewölbte Form annehmen. Es versteht sich von selbst, dass der Teilungszapfen jede geeignete geometrische Form annehmen kann, die sich als strömungstechnisch günstig erweist.

Der Teilungszapfen teilt den Fluidstrom. Der Teilungszapfen lenkt den stromaufwärts, axial zur Längsachse des Gehäuses verlaufenden Fluidstrom in eine radiale Strömungsrichtung um. In der radialen Strömungsrichtung kann der Fluidstrom einem Drehimpuls um seine eigene Drehachse ausgesetzt werden.

Der Fluidstrom wird durch den Teilungszapfen geteilt und strömt in das Innere der Drallkammer hinein. Der Fluidstrom fließt nach der Teilung an dem Führungselement entlang. Stromabwärts überführt das Führungselement den Fluidstrom aus einer axialen Strömungsrichtung entlang der Längsachse des Gehäuses in eine radiale Strömungsrichtung relativ zur Längsachse des Gehäuses.

Nach der Überführung in die radiale Strömungsrichtung im Bereich des Führungselements wird der Fluidstrom einem Drehimpuls um die Drehachse des Fluidstroms ausgesetzt.

An einem stromabwärtigen Ende des Führungselements ist der Drallzapfen angeordnet, der den sich um seine Drehachse drehenden Fluidstrom bei der Überführung in eine Wirbelströmung unterstützt.

Die Wirbelströmung des Fluids nimmt vorzugsweise die Form einer logarithmischen Spirale an. Die Wirbelströmung umfasst dabei den um sich um seine Drehachse rotierenden Fluidstrom.

Der Drallzapfen überführt den sich um seine Drehachse drehenden Fluidstrom entlang der Längsachse des Gehäuses in eine Wirbelströmung des Fluids. Der Drallzapfen des Führungselements unterstützt die Überführung des Fluidstroms in die Wirbelströmung.

Mithilfe des Teilungszapfens des Führungselements wird der Fluidstrom nach Durchströmen des Zulaufs aus einer Strömungsrichtung, die sich entlang der Längsachse des Gehäuses erstreckt, in eine Wirbelströmung des Fluids überführt.

Die Wirbelströmung des Fluids erstreckt sich radial und/oder in Form einer logarithmischen Spirale stromabwärts hinter dem Führungselement im Inneren der Drallkammer.

### Struktur

Die Drallkammer weist an ihrer Wand, die dem Fluidstrom zugeneigt ist, wenigstens eine Struktur auf, mit der die Reibung der Wand gegenüber dem Fluidstrom verringerbar ist.

Das Führungselement weist eine Wand auf, die dem Fluidstrom zugeneigt ist. Die Wand des Führungselements umfasst wenigstens eine Struktur, mit der die Reibung des Führungselements gegenüber dem Fluidstrom verringert werden kann.

Nach einer Ausführungsform der Erfindung umfasst wenigstens eine Wand der Drallkammer eine Struktur, die die Fließeschwindigkeit des Fluidstroms deutlich erhöht.

Die Wand der Drallkammer ist dabei fluidführend. Die Wand ist zudem dem Führungselement zugeneigt.

Eine weitere Ausführungsform der Erfindung sieht vor, dass eine Struktur an einer Wand des Führungselements angeordnet ist. Die Wand des Führungselements ist dabei der Drallkammer zugewandt. Die an der Wand angeordnete Struktur erhöht die Geschwindigkeit des Fluidstroms um ein Vielfaches.

Durch die Struktur, die die Geschwindigkeit des Fluidstroms erhöht und die an der Wand der Drallkammer angeordnet ist, welche dem Führungselement zugewandt ist, erhöht sich die Strömungsgeschwindigkeit durch Bildung einer kavitativen Grenzschicht des Fluids um ein Vielfaches.

An der Wand der Drallkammer und/oder an der Wand des Führungselements, die beide dem Fluidstrom zugewandt sind, ist wenigstens eine Struktur angeordnet, durch die an der Wand der Drallkammer und/oder an der Wand des Führungselements eine Kavitationsoberfläche ausbildbar ist. Es versteht sich von selbst, dass statt der Kavitationsoberfläche auch eine kavitative Grenzschicht ausbildbar sein kann.

Die Struktur kann jede beliebige geometrische Form annehmen. Wenigstens zwei Strukturen sind an der Wand des Führungselements angeordnet. Die wenigstens zwei Strukturen können auch an der Wand der Drallkammer ausgebildet sein, wobei die Wände jeweils dem Fluidstrom zugewandt sind.

Die geometrische Struktur kann die Form von Schuppen annehmen. Sie kann ebenfalls die Form von Noppen annehmen. Ebenfalls kann die Struktur wie ein Haarteppich ausgebildet sein. Darüber hinaus kann die Struktur jede andere geometrische Form annehmen, mit der eine Mikrokavitation erzeugbar ist.

Weiterhin ist vorgesehen, dass zur Erzeugung wenigstens einer Mikrokavitationshülle wenigstens eine bewegliche geometrische Struktur mit wenigstens einer mikrokavitationserzeugenden, starren Geometrie ausgebildet sein kann.

Eine andere Ausführungsform der Erfindung sieht vor, dass das Führungselement eine dem Fluidstrom zugewandte Wand aufweist, die wenigstens eine Struktur umfasst, die wenigstens eine Abrisskante umfasst. Die Struktur kann auch ein Element umfassen, das eine vorbestimmte Rauigkeit aufweist.

Eine flächige Ausbildung einer Abrisskante des Führungselements sowie eine dadurch erzeugte Mikrokavitation bewirken eine Herabsenkung des Rohrreibungsbeiwertes auf nahezu Null.

Die Anordnung wenigstens einer Abrisskante und/oder die Anordnung eines, eine Rauigkeit aufweisenden Elements bewirkt, dass ein Strömungswiderstand und insbesondere ein Reibungsbeiwert der Wand des Führungselements, die dem Fluidstrom zugeneigt ist, in der Weise minimiert wird, dass sich an der Wand des Führungselements in Richtung zur Fluidströmung hin eine kavitative Grenzschicht bildet.

Die Anordnung wenigstens einer Abrisskante und/oder die Anordnung eines, eine Rauigkeit aufweisenden Elements bewirkt, dass ein Strömungswiderstand und insbesondere ein Reibungsbeiwert der Wand der Drallkammer, die dem Fluidstrom zugeneigt ist, in der Weise minimiert wird, dass sich an der Wand der Drallkammer in Richtung zur Fluidströmung hin eine kavitative Grenzschicht bildet.

Die Anordnung der Abrisskante und/oder die Anordnung eines, eine Rauigkeit aufweisenden Elements führt zu einer Erhöhung der Strömungsgeschwindigkeit des Fluids in der Fluidströmung. Auf dieselbe Weise kann die Geschwindigkeit der Fluidströmung auch in dem Bereich erhöht werden, in dem die Fluidströmung einem Drehimpuls um seine Drehachse ausgesetzt ist. Ebenfalls auf dieselbe Weise kann die Geschwindigkeit der Fluidströmung in dem Bereich erhöht werden, in dem sich die Fluidströmung in einer Wirbelströmung erstreckt.

Durch die Anordnung der Abrisskante und/oder durch die Anordnung eines, eine Rauigkeit aufweisenden Elements wird eine Reduzierung der Oberflächenspannung des Fluids von wenigstens 10 % erreicht. Die Viskosität des Fluids im Fluidstrom kann um wenigstens 3 % erhöht werden.

Das Führungselement ist als ein Mikrokavitationserzeuger ausgebildet. Der Mikrokavitationserzeuger ist dabei flächig ausgebildet und umfasst wenigstens eine Abrisskante.

Die Anordnung der Abreißkante bewirkt, dass die Strömung des Fluids zumindest kurzzeitig abreißt.

Bei einer Geschwindigkeit des Fluidstroms von >Re = 2.400 bis 5.000 reißt die Strömung des Fluidstroms zumindest kurzzeitig und unter Bildung wenigstens einer Mikrokavitationsblase ab.

Wenigstens zwei Mikrokavitationsblasen bilden eine äußere Kavitationshülle.

Die Kavitationshülle kann auch als Kavitationsblase ausgebildet sein.

Im Weiteren wird von der Kavitationshülle gesprochen. Die Kavitationshülle reduziert den Reibungsbeiwert der Wand der Drallkammer und/oder der Wand des Führungselements, welche dem Fluidstrom zugewandt sind gegenüber dem Fluidstrom, auf einen Wert von nahezu Null.

Mithilfe der Reduzierung des Reibungsbeiwertes ist die Rotationsgeschwindigkeit des Fluidstroms in der Drallkammer um ein Vielfaches steigerbar. Zur Erreichung einer definierten Geschwindigkeit ist ein vergleichsweise geringerer Energieaufwand notwendig.

Ein weiterer Vorteil der Erfindung besteht darin, dass die Stabilität des Fluidstroms steigerbar ist. Zur Aufrechterhaltung der Rotation des Fluidstroms um seine Drehachse ist eine geringere Leistung erforderlich. Gleiches gilt auch für die Rotation des Fluidstroms im Bereich der Wirbelströmung.

Durch die Ausbildung der Kavitationshülle ist die Reibung der Wand des Führungselements und/oder der Wand der Drallkammer relativ zum Fluidstrom deutlich verringerbar.

An den Stellen erhöhter Reibung der Wand der Drallkammer und/oder der Wand des Führungselements, die jeweils dem Fluidstrom zugeneigt sind, sind sowohl die jeweilige Wandreibung als auch der Reibungsbeiwert erheblich verringerbar.

### Drehimpuls des Fluidstroms und der Wirbelströmung

Die Drallkammer ist zwischen dem Zulauf und dem Ablauf des Fluids positioniert, wobei im Inneren der Drallkammer wenigstens ein Führungselement angeordnet ist, mit dem das Fluid in einem Fluidstrom aus einer axialen Strömungsrichtung in eine radiale Strömungsrichtung überführbar ist. Wobei der Fluidstrom einem Drehimpuls um die Drehachse des Fluidstroms aussetzbar ist.

An einem stromabwärtigen Ende des Führungselements ist ein Drallzapfen angeordnet, der den sich um seine Drehachse drehenden Fluidstrom in eine Wirbelströmung überführt.

Das Führungselement weist wenigstens eine Einrichtung auf, die der Beschleunigung des sich um seine Drehachse drehenden Fluidstrom Fluids dient. Die Fluidströmung hat dabei zusätzlich zu der Drehung um ihre Drehachse einen relativ zur Längsachse des Gehäuses radialen Verlauf.

Die Einrichtungen zur Beschleunigung des Fluidstroms erweist sich als sehr vorteilhaft. Zur Erzeugung einer Wirbelströmung eines Fluids ist ein hoher Energieeintrag erforderlich. Zudem findet die Erzeugung der Wirbelströmung des Fluids auf sehr engem Raum statt.

Bei der Erzeugung des Drehimpulses und der Wirbelströmung des Fluidstroms kommt der sog. physikalische Drallsatz zur Wirkung. Die erforderliche Kraft, die zur Erzeugung der Wirbelströmung erforderlich ist, ist dabei eine Funktion in Abhängigkeit des Radius zur Mittelachse des Fluidstroms.

Mit anderen Worten: Es wird eine umso höhere Energie erforderlich, je näher an der Mittelachse der Fluidstroms die Rotation aus einer Translationsbewegung erfolgen soll.

Zur Erzeugung des Drehimpulses und/oder der Wirbelströmung des Fluidstroms sind das Führungselement und der Drallzapfen angeordnet.

Die Führungselemente können insbesondere schraubenförmig ausgebildet sein. Der Drehimpuls wird durch eine Überführung des Fluidstroms aus einer Strömungsrichtung entlang der Längsachse des Gehäuses in eine radiale Richtung erzeugt, die sich vorzugsweise rechtwinklig zur Längsachse des Gehäuses erstreckt.

Zur Erzeugung der Wirbelströmung des Fluids hingegen verjüngt sich der Querschnitt des Führungselements am stromabwärtigen Ende des Führungselements in einem vorbestimmten Winkel, der dem Rotationswinkel der Wirbelströmung des Fluids entspricht.

Mithilfe des Drallzapfens am stromabwärtigen Ende des Führungselements im Inneren der Drallkammer wird der Fluidstrom, der um seine Drehachse rotiert in eine spiralförmig verlaufende, sich radial erstreckende Wirbelströmung überführt. Die Wirbelströmung verläuft zwischen dem Drallzapfen am stromabwärtigen Ende des Führungselements und dem Ablauf des Gehäuses.

Auf Basis eines sog. Impulsmomenten Satzes bzw. auf Grundlage des Drallsatzes geht der Fluidstrom in eine Rotation um seine Drehachse über. Der um seine Drehachse rotierende Fluidstrom geht dann in die sich axial zum Gehäuse erstreckende Wirbelströmung über. Erfindungsgemäß entstehen keine ohne oder nur geringe Verlusten an Strömungsenergie.

Vorzugsweise ist eine Reduzierung der erforderlichen Energie in Form von Druck um mehr als 20 % realisierbar.

Eine weitere Ausführungsform der Erfindung sieht einen tellerförmigen Aufbau des Führungselements und/oder einen tellerförmigen Aufbau der umgebenden Drallkammer vor. Auf diese Weise ist eine erhöhte Ergiebigkeit der Drallbildung des sich um seine Achse drehenden Fluidstroms erzielbar.Der Fluid E = V/b. E entspricht dabei dem Fluidstrom, wohingegen b der Plattenabstand ist.

Das Fluid wird relativ zur Längsachse des Gehäuses axial über den Zulauf in die Drallkammer des Gehäuses eingeführt.

Mithilfe des Teilungszapfens, der am stromaufwärtigen Ende des Führungselements angeordnet ist, wird der Fluidstrom vorzugsweise ringförmig aufgeteilt.

Mithilfe des vorzugsweise schraubenförmig ausgebildeten wenigstens einen Führungselements und/oder mithilfe einer insbesondere trompetenförmigen Außenführung der Drallkammer wird der Fluidstrom radial bis zum Außenrand der Fluidkammer geführt. Der Fluidstrom wird hierbei in Rotation und/oder in Drehung um die Drehachse des Fluidstroms versetzt. Die Begriffe "Rotation" und "Drehung" sowie "Längsachse" und "Drehachse" werden in Bezug auf den Fluidstrom als Synonyme verwendet.

Die Rotation des Fluidstroms um seine Längsachse erfolgt vorzugsweise radial zur Längsachse des Gehäuses im Bereich des Führungselements. Die Rotation des Fluidstroms um seine Längsachse erfolgt stromaufwärts oberhalb des Drallzapfens zwischen dem Führungselement und der Wand der Drallkammer, die dem Fluidstrom zugeneigt ist.

Die Rotation des Fluidstroms um die Drehachse des Fluidstroms und/oder die Erhöhung der Geschwindigkeit des sich um seine Drehachse drehenden Fluidstroms wird durch Anordnung wenigstens einer Einrichtung zur Beschleunigung des Fluidstroms erreicht.

Der Fluidstrom wird aus der sich axial zur Längsachse des Gehäuses erstreckenden Strömungsrichtung in eine radial zur Längsachse des Gehäuses erstreckenden Strömungsrichtung überführt. In der sich radial zur Längsachse des Gehäuses erstreckenden Strömungsrichtung erhält der Fluidstrom im Führungselement ein Drehimpuls.

Auf Grund des Drehimpulses dreht sich der Fluidstrom um seine Drehachse. Der sich um seine Drehachse drehende Fluidstrom fließt weiter durch die Drallkammer in Richtung auf den Drallzapfen des Führungselements hin.

Im Bereich des Drallzapfens wird der sich um seine Drehachse drehende Fluidstrom in eine Wirbelströmung überführt. Die Wirbelströmung erstreckt sich vom Drallzapfen in Richtung auf den Ablauf des Gehäuses hin. Die Wirbelströmung erstreckt sich zwischen dem Drallzapfen und dem Ablauf entlang der Längsachse des Gehäuses.

Mit anderen Worten überführt der Drallzapfen den sich um seine Drehachse drehenden Fluidstrom entlang der Längsachse des Gehäuses in eine Wirbelströmung des Fluids. Der Drallzapfen des Führungselements unterstützt dabei die Überführung des Fluidstroms in die Wirbelströmung.

Die Wirbelströmung des Fluids nimmt vorzugsweise die Form einer logarithmischen Spirale an. Die Wirbelströmung umfasst dabei den um sich um seine Drehachse rotierenden Fluidstrom.

Im Bereich der Wirbelströmung erstreckt sich der um seine Längsachse drehenden Fluidstroms radial und/oder in Form einer logarithmischen Spirale stromabwärts hinter zwischen dem Drallzapfen des Führungselements und dem Ablauf des Gehäuses.

Durch den kontinuierlich nachfließenden Fluidstrom erhält der Fluidstrom in der wenigstens einen Einrichtung zur Beschleunigung des Fluidstroms einen Drehimpuls und wird dadurch in eine Drehung um die Längsachse des Fluidstsroms versetzt.

Der auf diese Weise beschleunigte und um seine Drehachse in Rotation versetzte Fluidstrom wird im Inneren der Drallkammer über die innere Auslaufkontur und/oder über die äußere Auslaufkontur der Drallkammer in Richtung des Drallzapfens weitergeführt.

Bei der Rotation des Fluidstroms um die Längsachse des Fluidstroms im Bereich des Führungselements der Drallkammer wirkt der Drehimpuls des Fluidstroms der Reibung des Fluidstroms an der Wand des Gehäuses und/oder an der Wand des Führungselements entgegen.

Bei der Rotation des sich um seine Längsachse drehenden Fluidstroms wirkt im Bereich der Wirbelströmung in stromabwärtiger Richtung hinter dem Führungselement der Drehimpuls des Fluidstroms der Reibung des Fluidstroms an der Wand des Gehäuses und/oder an der Wand des Führungselements entgegen. Dabei erstreckt sich im Bereich der Wirbelströmung der sich um seine Längsachse drehende Fluidstrom radial und/oder in Form einer logarithmischen Spirale stromabwärts hinter zwischen dem Drallzapfen des Führungselements und dem Ablauf des Gehäuses.

Die Wirbelströmung des sich um seine Längsachse drehenden Fluidstroms wird als Vortex bezeichnet.

Im vorliegenden Fall bezeichnet die Wirbelströmung des sich um seine Längsachse drehenden Fluidstroms eine drehende Bewegung von Fluidmolekülen um eine gerade Drehachse. Die Drehachse kann auch geschwungen sein oder jede andere geometrische Form annehmen.

Die Wirbelstärke der Wirbelströmung ist im Zentrum der Wirbelströmung am größten. Dagegen geht die Wirbelstärke im äußeren Bereich der Wirbelströmung fast gegen Null. Fluidmoleküle bewegen sich im äußeren Bereich des Wirbels um sich selbst.

Umgedreht verhält es sich mit dem Druck der Wirbelströmung. Der Druck der Wirbelströmung ist im Zentrum des Wirbels am niedrigsten und im äußeren Bereich des Wirbels am größten.

Die Wirbelströmung bildet eine Wirbelröhre aus. Die Wirbelröhre vollzieht dabei die Bewegungen der Wirbelströmung nach. Daraus folgt, dass sich die Wirbelröhre winden und/oder biegen und/oder strecken kann.

Die Wirbelstärke der Wirbelströmung des Fluids definiert sich als Funktion der Geschwindigkeit.

Die Wirbelstärke beschreibt im vorliegenden Fall die Drehung der Moleküle des Fluidstroms um sich selbst.

Die Wirbelstärke weist in die Richtung der Drehachse der Fluidelemente. Der Wert der Wirbelstärke ist ein Maß für die Drehgeschwindigkeit der Fluidmoleküle.

In dem Maße, in dem der Vektor der Geschwindigkeit tangential zur Stromlinie verläuft, erstreckt sich die Wirbelstärke tangential zur Wirbellinie.

Die Wirbellinie wird dabei an jedem Punkt von der Wirbelstärke tangiert.

Im vorliegenden Fall beschreibt die Wirbelfläche eine von den Wirbellinien gebildete Fläche in der Fluidströmung.

Dagegen ist unter dem Begriff einer Wirbelröhre ein röhrenförmiger Bereich zu verstehen, dessen Mantelfläche die Wirbellinien umfasst.

Der Begriff Wirbelfaden beschreibt eine Wirbelröhre mit vergleichsweise kleinem Querschnitt. Im Wirbelfaden sind die Eigenschaften des Fluids über dem Querschnitt der Wirbelröhre konstant.

Der Durchmesser der Wirbelströmung reduziert sich gegenüber dem Durchmesser des Zulaufs der Vorrichtung derart, dass im Bereich der Wirbelströmung vorzugsweise aber nicht ausschließlich ein Unterdruck von wenigstens 0,5 bar gegenüber dem Zulauf entsteht. Es versteht sich von selbst, dass auch ein anderer Wert angenommen werden kann.

### Kavitation

Die fluidführende Wand der Drallkammer, die dem Fluidstrom zugewandt ist und/oder die fluidführende Wand des Führungselements, die der Drallkammer zugewandt ist, sind zur Verringerung eines Reibungswiderstands der jeweiligen Wand gegenüber dem Fluidstrom so ausgebildet, dass an der jeweiligen Wand eine kavitative Grenzschicht ausgebildet ist.

Auf der kavitativen Grenzschicht der Wand des Führungselements und/oder der Drallkammer gleitet der Fluidstrom im Wesentlichen reibungsfrei über die jeweilige Wand des Führungselements und/oder der Drallkammer.

Liegt der wenigstens eine Fluidstrom als Gas und/oder als Fluidgemisch vor, bildet sich eine turbulente Grenzschicht aus. Die vorzugsweise turbulente Grenzschicht bildet sich aus stets neu entstehenden Mikroturbulenzen heraus.

Vorzugsweise entspricht der Wirbelfuß maximal 0,5 x des Durchmesser des Zulaufs. Selbstverständlich kann auch ein anderer Wert angenommen werden.

### Zumindest bereichsweise Verengung des Ablaufs (Venturi-Düse)

Erfindungsgemäß ist der Ablauf für den Fluidstrom zumindest bereichsweise verengt.

Stromabwärts hinter der Drallkammer ist der Ablauf für das Fluid angeordnet.

Der Ablauf ist ein vorzugsweise langes, innen hohles Rohr.

In seinem Durchmesser ist der Ablauf zumindest bereichsweise verengt. Die Verengung des Ablaufs stromabwärts hinter der Drallkammer wird zur Vereinfachung als Venturi-Düse bezeichnet.

Der Ablauf kann auch als Düse mit einem Venturi-Effekt ausgebildet sein. Die Düse mit Venturi-Effekt ist in axialer Richtung einstellbar.

Die Erfindung versteht unter dem Begriff "Venturi-Düse" ein vorzugsweise glattwandiges Rohr mit einer Verengung des Querschnitts. Wird ein gasförmiges oder flüssiges Fluid durch die Venturi-Düse hindurchgeleitet, ist an der Stelle des engsten Querschnitts der Venturi-Düse ein dynamischer Druck maximal. Der dynamische Druck wird auch als Staudruck bezeichnet, wogegen der statische Druck im Inneren der Venturi-Düse nur minimal ist.

Die Geschwindigkeit des durch die Venturi-Düse strömenden Fluids (Gas; Flüssigkeit) steigt beim Durchströmen des eingeschnürten Teils der Venturi-Düse relativ zum Querschnitt der Venturi-Düse an. Dies ist damit begründet, dass an jeder Stelle innerhalb der Venturi-Düse dieselbe Menge des Fluids die Venturi-Düse durchfließt.

Weil an jeder Stelle der Venturi-Düse dieselbe Menge an Fluid durchfließt, steigt im Verhältnis der Querschnitte der Venturi-Düse beim Durchströmen des eingeschnürten Teils die Geschwindigkeit des Fluidstroms an. Zur gleichen Zeit sinkt jedoch der Druck in der Düse. Als Düse wird der enge Teil der Venturi-Düse bezeichnet.

Auf diese Weise entsteht in der Venturi-Düse ein Differenzdruck. In Strömungsrichtung vor dem eingeschnürten Teil (Düse) entsteht ein Überdruck, wogegen im stromabwärtigen Teil der Venturi-Düse hinter dem eingeschnürten Teil (Düse) ein Unterdruck anliegt.

Aufgrund der sog. Bernoulli-Gleichung überlagern sich die Unterdruckbereiche der Wirbelströmung des Fluidstroms mit dem Unterdruckbereich der Venturi-Düse. Der Fluidstrom dreht sich im Bereich der Venturi-Düse um seine Längsachse.

Hierdurch entsteht eine deutliche Leistungssteigerung der Unterdruckbereiche der Wirbelströmung.

Dies wirkt sich vorteilhaft aus, da zusätzlich über eine Luftzuführung durch den anliegenden Unterdruck ein weiteres Medium (Fluid) angesaugt werden kann.

Die Venturi-Düse ist entsprechend den anliegenden Druckverhältnissen anpassbar.

Mit anderen Worten wird die Wirbelströmung mit dem in Rotation um seine Längsachse befindlichen Fluidstroms in die Venturi-Düse hineingeführt. Der sich in der Wirbelströmung erstreckende Fluidstrom nimmt vorzugsweise die Form einer logarithmischen Spirale an.

Die Venturi-Düse ist so anpassbar, dass sich nach dem bereits bekannten Satz von Bernoulli ein Unterdruck von wenigstens 0,5 bar ausbildet. Selbstverständlich kann auch ein anderer Wert angenommen werden.

Zusammenfassend ist der Ablauf an dem stromabwärtigen Ende des Führungselements als Verengung ausgebildet. Vorzugsweise ist die Verengung als Venturi-Düse ausgebildet.

Durch die Anordnung der Venturi-Düse ist der Ablauf für den Fluidstrom stromabwärts hinter der Drallkammer zur Erhöhung der Strömungsgeschwindigkeit des Fluidstroms verengbar.

Eine andere Ausführungsform der Erfindung sieht vor, dass durch die Anordnung der zumindest bereichsweisen Verengung des Ablaufs (Venturi-Düse) stromabwärts hinter der Drallkammer ein Unterdruck in der radialen Wirbelströmung des Fluidstroms erzeugbar ist.

Die Verengung ist darüber hinaus in ihrem Durchmesser und/oder in Bezug auf ihre Länge veränderbar.

Die rotierende Wirbelströmung wird vorzugsweise um den Zuführungskanal herum geführt. Der Zuführungskanal kann als Luftdüse ausgebildet sein. Über den Zuführungskanal können Feststoffe, Flüssigkeiten und Gase (z.B. Luft) in die Drallkammer und/oder in den Fluidstrom eingeführt werden.

### Diffusor

An der stromabwärtigen Seite des Ablaufs ist ein Diffusor angeordnet, der die Wirbelströmung des Fluidstroms wieder entspannt. Die Wirbelströmung wird nach dem Austritt aus der Verengung des Ablaufes (Venturi-Düse) in den Diffusor eingeführt.

Die Wirbelströmung wird in dem Diffusor entspannt, der sich an die Venturi-Düse und/oder an den Ablauf anschließt.

Stromabwärts hinter der engsten Stelle des Ablaufs (Venturi-Düse) ist ein Diffusor angeordnet.

Der Diffusor entspannt die radiale Wirbelströmung des Fluids druckseitig.

Eine Translationsgeschwindigkeit der Wirbelströmung des Fluids ist auf das Niveau der Translationsgeschwindigkeit im Zulauf anhebbar.

Im Diffusor wird der Drehimpuls des sich um seine Längsachse drehenden Fluidstroms abgebaut. Zusätzlich wird die Wirbelströmung zur Ruhe gebracht und abgebaut. Der aus dem Diffusor austretende Fluidstrom weist in sich weder eine Rotation noch einen Drehimpuls noch andere Bewegung des Fluidstroms auf.

### System zur Reduzierung einer Oberflächenspannung und/oder einer Viskosität eines Fluids

Erfindungsgemäß wird ein System zur Reduzierung einer Oberflächenspannung und/oder einer Viskosität eines Fluids offenbart.

Das System umfasst ein Gehäuse, das wenigstens einen Zulauf und einen Ablauf für das Fluid aufweist.

In seinem Inneren weist das Gehäuse eine von dem Fluid durchströmbare Drallkammer auf.

Im System ist die Drallkammer zwischen dem Zulauf und dem Ablauf für das Fluid positioniert.

In dem System zur Reduzierung einer Oberflächenspannung und/oder einer Viskosität eines Fluids ist im Inneren der Drallkammer wenigstens ein Führungselement angeordnet.

Im Inneren der Drallkammer ist wenigstens ein Führungselement angeordnet, mit dem das Fluid in einem Fluidstrom aus einer axialen Strömungsrichtung in eine radiale Strömungsrichtung überführbar ist. Durch die Überführung in das Führungselement ist der Fluidstromeinem Drehimpuls um die Drehachse des Fluidstroms aussetzbar.

An einem stromabwärtigen Ende des Führungselements weist das System einen Drallzapfen auf, der den sich um seine Drehachse drehenden Fluidstrom in eine Wirbelströmung überführt.

Mit dem Führungselement ist das Fluid aus einer axialen Strömungsrichtung in eine radiale Strömungsrichtung überführbar, in der sich der Fluidstrom um die eigene Drehachse dreht.

Die Drallkammer des Systems und/oder das Führungselement des Systems weisen jeweils wenigstens eine, dem Fluid zugewandte Wand auf. Die Wand umfasst jeweils wenigstens eine, die Reibung des Fluidstroms gegenüber der Wand verringernde Struktur.

Der Ablauf für den Fluidstrom des Systems ist in Richtung der Strömung des Fluids zumindest bereichsweise verengt.

### Verfahren zur Reduzierung einer Oberflächenspannung und/oder einer Viskosität eines Fluids

Erfindungsgemäß ist darüber hinaus ein Verfahren zur Reduzierung einer Oberflächenspannung und/oder einer Viskosität eines Fluids vorgesehen.

Bei dem Verfahren weist ein Gehäuse, das mit einem Fluid durchströmt wird, wenigstens einen Zulauf und einen Ablauf auf.

Das Verfahren sieht vor, dass eine im Inneren des Gehäuses angeordnete Drallkammer von dem Fluid durchströmt wird.

Dabei ist die Drallkammer zwischen dem Zulauf und dem Ablauf für das Fluid positioniert.

Im Inneren der Drallkammer ist wenigstens ein Führungselement angeordnet, mit dem das Fluid in einem Fluidstrom aus einer axialen Strömungsrichtung in eine radiale Strömungsrichtung überführt wird. Mit der Überführung des Fluidstroms in das Führungselement wird der Fluidstrom einem Drehimpuls um die Drehachse des Fluidstroms ausgesetzt.

Am stromabwärtigen Ende des Führungselements ist ein Drallzapfen angeordnet, mit dem der sich um seine Drehachse drehende Fluidstrom in eine Wirbelströmung überführt wird.

Die Drallkammer und/oder das Führungselement weisen wenigstens eine, jeweils dem Fluid zugewandte Wand auf.

Die Wand umfasst jeweils wenigstens eine Struktur, mit der die Reibung des Fluids gegenüber der jeweiligen Wand der Drallkammer und/oder des Führungselements verringert wird.

Nach dem Verfahren wird der Ablauf für das Fluid in Richtung der Strömung für das Fluid zumindest bereichsweise verengt.

### Anwendungsbeispiele für die Erfindung

Die Vorrichtung zur Reduzierung einer Oberflächenspannung und/oder einer Viskosität, das System zur Reduzierung einer Oberflächenspannung und/oder einer Viskosität eines Fluids sowie das zugehörige Verfahren sind bei der Gewinnung von Trinkwasser zur Reduzierung der Oberflächenspannung des Wassers in geschlossenen Rohrleitungssystemen einsetzbar.

Die Reduzierung der Oberflächenspannung dient zur Reinhaltung des Trinkwassers bei der Trinkwassergewinnung und während des Transports des Trinkwassers.

Die Vorrichtung zur Reduzierung der Oberflächenspannung und/oder der Viskosität des Fluids, das zugehörige System sowie das zugehörige Verfahren erweisen sich als äußerst vorteilhaft, da auf diese Weise Rohrleitungen sowie andere, von Wasser durchflutete Teile keinen Biofilm bilden können, der zur Entstehung von Legionellen führen könnte. Neben den Legionellen könnten auch andere Bakterien oder Keime oder weitere, die Trinkwasserqualität beeinflussende organische oder anorganische Faktoren auftreten.

Im Weiteren wird beispielhaft aber nicht ausschließlich von einem Biofilm ausgegangen.

Auf dem oberflächenentspannten Wasser kann sich der Biofilm nicht an der Rohrwandung anlegen und dort festsetzen.

Bereits bestehender Biofilm wird von der Innenseite der Rohrleitung sowie von den wasserdurchfluteten Teilen der Wasserleitung abgelöst.

Mithilfe der erfindungsgemäßen Vorrichtung, dem System sowie dem erfindungsgemäßen Verfahren wird die Gefahr des Auftretens von Legionellen und/oder Pseudomonaden und/oder von Biofilm und/oder Kolibakterien und/oder Enterokokken im Trinkwasser wirksam reduziert.

Durch die Verringerung der Oberflächenspannung sowie durch die Herabsetzung der Viskosität ist für die Filterung des Trinkwassers weniger Energie erforderlich, um das Fluid durch die zur Verfügung stehenden Membranen zu pressen.

Weitere Beispiele und Ausführungsformen der Erfindung werden anhand der Zeichnung näher beschrieben.

Hierbei zeigen:
**Fig. 1** - eine Vorrichtung zur Reduzierung einer Oberflächenspannung und/oder einer Viskosität des Fluids,
**Fig. 2** - eine Vorrichtung entsprechend der Fig. 1 mit einem Fluidstrom, auf den in einem Bereich ein Drehimpuls einwirkt und in einem anderen Bereich eine Wirbelströmung anliegt,
**Fig. 3** - eine Einrichtung zur Beschleunigung des Fluidstroms im Bereich des Führungselements,
**Fig. 4** - in perspektivischer Darstellung eine Struktur zur Anordnung an einer Wand des Führungselements und/oder der Drallkammer,
**Fig. 5** - eine Struktur entsprechend der Fig. 4 mit Kavitationsoberflächen,
**Fig. 6** - einen Querschnitt durch die Struktur mit Mikrokavitationserzeugern und Kavitationsblasen und
**Fig. 7** - eine Darstellung einer Struktur entsprechend der Fig. 6 mit Mikrokavitationserzeugern und Abrisskanten

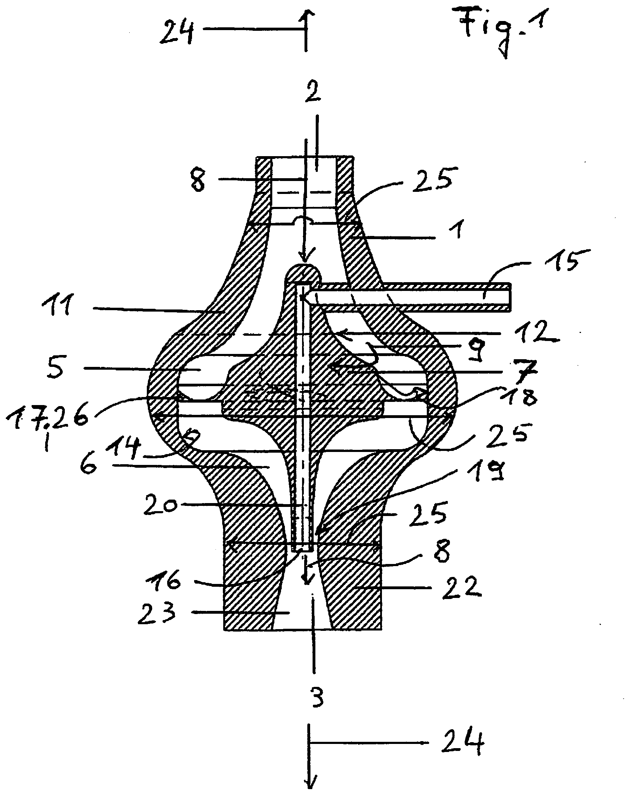

**Fig. 1** zeigt eine Vorrichtung zur Reduzierung einer Oberflächenspannung und/oder einer Viskosität eines Fluids 4 mit einem Gehäuse 1.

Das Gehäuse 1 weist einen Zulauf 2 auf.

Am stromabwärtigen Ende 22 des Gehäuses 1 ist ein Ablauf 3 angeordnet.

Im Inneren 6 des Gehäuses 1 ist eine Drallkammer 5 vorgesehen.

Die Drallkammer 5 ist durch einen Fluidstrom 4 (nicht gezeigt) durchströmbar. Im Inneren 6 der Drallkammer 5 des Gehäuses 1 erstreckt sich der Fluidstrom 4 zwischen der Wand 11, der Drallkammer 5 und der Wand 12 des Führungselements 7.

Im Inneren 6 der Drallkammer 5 des Gehäuses 1 ist wenigstens ein Führungselement 7 angeordnet, mit dem das Fluid 4 in einem Fluidstrom 4 aus einer axialen Strömungsrichtung 8 in eine radiale Strömungsrichtung 9 überführbar ist.

Nach Zuführung durch den Zulauf 2 des Gehäuses 1 erstreckt sich der Fluidstrom 4 in einer axialen Strömungsrichtung 8 entlang der Längsachse 24 des Gehäuses 1.

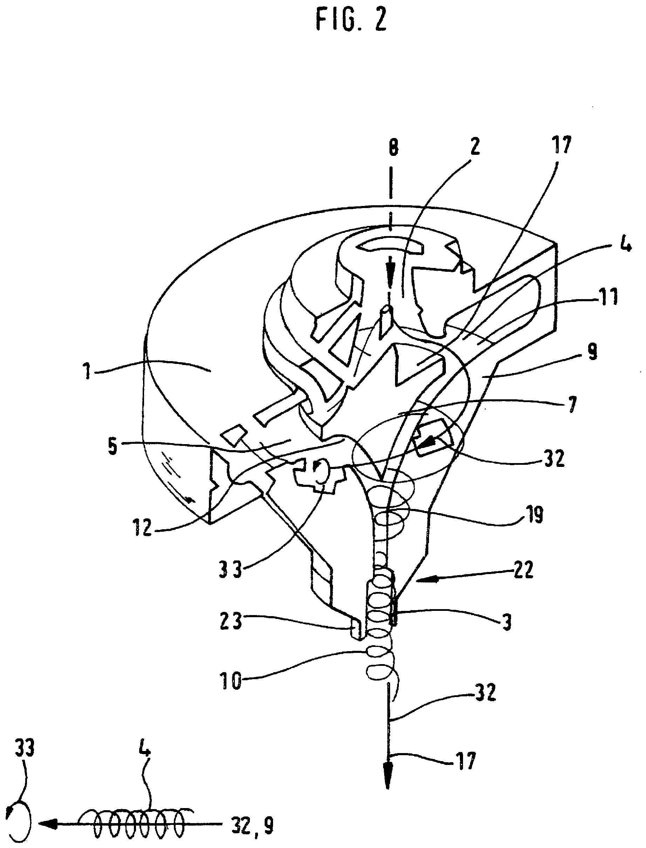

Mit Erreichen des Führungselements 7 wird der Fluidstrom 4 aus der axialen Strömungsrichtung 8 in eine radiale Strömungsrichtung 9 überführt (vgl. Fig. 2).

Mit der Überführuung in das Führungselement 7 ist der Fluidstrom 4 einem Drehimpuls 33 um die Drehachse 32 (beides nicht gezeigt) des Fluidstroms 4 aussetzbar.

Ein Durchmesser 25 des Führungselements 7 variiert dabei entlang der Längsachse 24 des Gehäuses 1 in einer axialen Strömungsrichtung 8 des Fluids 4.

Das Führungselement 7 ist in der Drallkammer 5 in Form eines Tellers 26 ausgebildet.

Im Bereich des Tellers 26 des Führungselements 7 sind Einrichtungen 17 zur Beschleunigung des Fluidstroms 4 angeordnet. In der Einrichtung 17 zur Beschleunigung des Fluidstroms 4 erhält der Fluidstrom 4 einen Drehimpuls 33 um die Drehachse 32 des Fluidstroms 4.

Die Einrichtung 17 der Fig. 1 weist zur Beschleunigung des Fluids 4 vorzugsweise, aber nicht ausschließlich, überhöhte Seitenwände auf, die den Drehimpuls 33 auf den Fluidstrom 4 übertragen.

Das Führungselement 7 ist in der Drallkammer 5 des Gehäuses 1 um die Längsachse 24 herum drehbar angeordnet.

Alternativ kann das Führungselement 7 auch nicht drehbar ausgebildet sein.

An einem stromabwärtigen Ende 22 des Führungselements 7 ist ein Drallzapfen 16 angeordnet, der den sich um seine Drehachse 32 drehenden Fluidstrom 4 in eine Wirbelströmung 10 überführt.

Zur Zuführung von festen und/oder flüssigen und/oder gasförmigen Stoffen in den Fluidstrom 4 ist ein Zuführungskanal 15 vorgesehen.

In Fig. 1 mündet der Zuführungskanal 15 in etwa rechtwinklig zu der Längsachse 24 des Gehäuses 1 in das Führungselement 7 ein.

Der Zuführungskanal 15 des Führungselements 7 erstreckt sich im Inneren des Führungselements 7 in etwa rechtwinklig zu der Längsachse 24 des Gehäuses 1.

Der entlang der Längsachse 24 des Gehäuses 1 sich erstreckende Bereich des Zuführungskanals 15 wird mit der Bezugsziffer 20 versehen.

Am stromabwärtigen Ende 22 des Führungselements 7 ist hinter dem Drallzapfen 16 der Ablauf 3 angeordnet, der eine Verengung 19 aufweist. Die Verengung 19 kann als eine sog. Venturi-Düse ausgebildet sein.

Die Drallkammer 5 im Inneren 6 des Gehäuses 1 umfasst eine Wand 11.

Die Wand 11 des Gehäuses 1 erstreckt sich von dem Zulauf 2 über die Drallkammer 5 des Gehäuses 1 bis hin zu dem Ablauf 3.

Die Wand 11 erstreckt sich über die Drallkammer 5 hinaus durch die Verengung (Venturi-Düse 19) bis hin zu dem Diffusor 23.

Die Drallkammer 5 umfasst einen Außenrand 14, mit dem das Fluid 4 im Inneren 6 der Drallkammer 5 geführt wird.

Stromabwärts hinter der Verengung 19 ist in Fig. 1 ein Diffusor 23 dargestellt.

**Fig. 2** zeigt die Vorrichtung zur Reduzierung einer Oberflächenspannung und/oder einer Viskosität eines Fluidstroms 4 mit dem Gehäuse 1 nach der Darstellung der Fig. 1.

In der Fig. 2 wird der Fluidstrom 4 durch den Zulauf 2 in das Gehäuse 1 eingeführt.

Im Bereich des Zulaufs 2 erstreckt sich der Fluidstrom 4 in axialer Strömungsrichtung 8.

Durch das Führungselement 7, das in der Drallkammer 5 des Gehäuses 1 angeordnet ist, wird der Fluidstrom 4 aus der axialen Strömungsrichtung 8 in eine radiale Strömungsrichtung 9 überführt.

Durch die Einrichtungen 17 zur Beschleunigung der radialen Strömungsrichtung 9 des Führungselements 7 erhöht sich die Fließgeschwindigkeit des sich um seine Drehachse 32 drehenden Fluidstroms 4 innerhalb der Drallkammer 5.

Mit der Überführuung in das Führungselement 7 ist der Fluidstrom 4 einem Drehimpuls 33 um die Längsachse 32 des Fluidstroms 4 aussetzbar.

Stromabwärts, hinter der Einrichtung 17 zur Beschleunigung des Führungselements 7 wird der sich um seine Längsachse 32 drehende Fluidstrom 4 in die Wirbelströmung 10 des Fluidstroms 4 überführt. Hierbei nimmt die Wirbelströmung 10 die Form einer logarithmischen Spirale an.

Der Fluidstrom 4 strömt in Form des Wirbels 10 zwischen der Wand 11 der Drallkammer 5 und der Wand 12 des Führungselements 7 entlang.

Am stromabwärtigen Ende 22 des Drallzapfens 16 des Führungselements 7 erstreckt sich der Fluidstrom 4 in Form des Wirbels 10 durch den Ablauf 3 des Gehäuses 1.

Im Bereich des Ablaufs 3 erstreckt sich der Fluidstrom 4 durch die Verengung 19 (Venturi-Düse).

Stromabwärts hinter der Verengung 19 fließt der sich um seine Längsachse 32 drehende Fluidstrom 4 in Form des Wirbels 10 in den Diffusor 23 hinein.

In dem Diffusor 23 entspannt sich der, sich der um seine Längsachse 32 drehende Fluidstrom 4. In dem Diffusor 23 entspannt sich ebenfalls der Wirbel 10 des Fluidstroms 4 aus der radialen Strömungsrichtung 9 in die axiale Strömungsrichtung 8.

Eine weitere Beschleunigung der radialen Strömungsrichtung 9 der Wirbelströmung 10 des Fluidstroms 4 erfolgt durch die an sich bekannte Wirkung der Venturi-Düse 19 im Bereich der Verengung des Ablaufs 3 des Gehäuses 1.

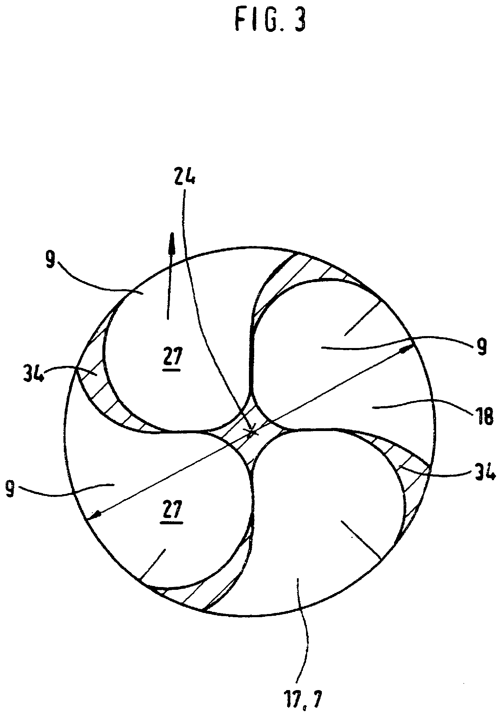

**Fig. 3** zeigt die Einrichtung zur Beschleunigung 17 des Führungselements 7.

Der Verlauf der Längsachse des Gehäuses 1 (nicht gezeigt) durch die Einrichtung zur Beschleunigung 17 ist mit der Bezugsziffer 24 gekennzeichnet.

Die Einrichtung zur Beschleunigung 17 umfasst Aufnahmeschalen 27, in die der Fluidstrom 4 entlang der Längsachse 24 des Gehäuses 1 auftrifft. Die Aufnahmeschalen 27 der Einrichtung zur Beschleunigung 17 überführen den Fluidstrom 4 aus der axialen Strömungsrichtung 8 entlang der Längsachse 24 in die radiale Strömungsrichtung 9.

Die Einrichtung 17 zur Beschleunigung des Fluidstroms 4 zeigt nach Fig. 3 überhöhte Seitenwände 34, die den Drehimpuls 33 auf den Fluidstrom 4 übertragen.

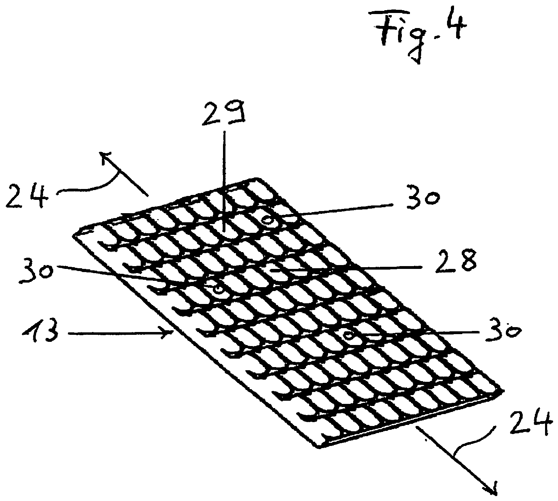

**Fig. 4** zeigt eine Struktur 13, die an der Wand 11 der Drallkammer 5 und/oder an der Wand 12 des Führungselements 7 angeordnet sein kann.

Die Struktur 13 umfasst eine Kavitationsoberfläche 28.

Im Beispiel der Fig. 4 ist die Kavitationsoberfläche 28 schuppenförmig dargestellt.

Die Kavitationsoberfläche 28 der Struktur 13 umfasst Mikrokavitationserzeuger 29.

Die Mikrokavitationserzeuger 29 sind an der Struktur 13 quer zur Längsachse 24 des Gehäuses 1 in Reihen angeordnet.

Die Mikrokavitationserzeuger 29 sind in Längsachse 24 des Gehäuses 1 auf der Struktur 13 in Spalten positioniert.

Die Mikrokavitationserzeuger 29 der Struktur 13 der Fig. 4 sind zur Erzeugung von Kavitationsblasen 30 ausgebildet.

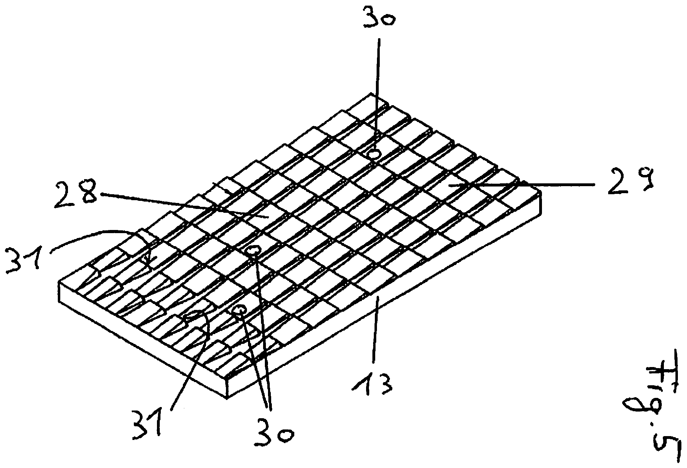

**Fig. 5** zeigt eine Struktur 13 mit einer Kavitationsoberfläche 28 entsprechend der Fig. 4.

Die Kavitationsoberfläche 28 der Fig. 5 umfasst Mikrokavitationserzeuger 29, die Kavitationsblasen 30 aufweisen.

Im Unterschied zu Fig. 4 weisen die Mikrokavitationserzeuger 29 der Kavitationsoberfläche 28 Abrisskanten 31 auf.

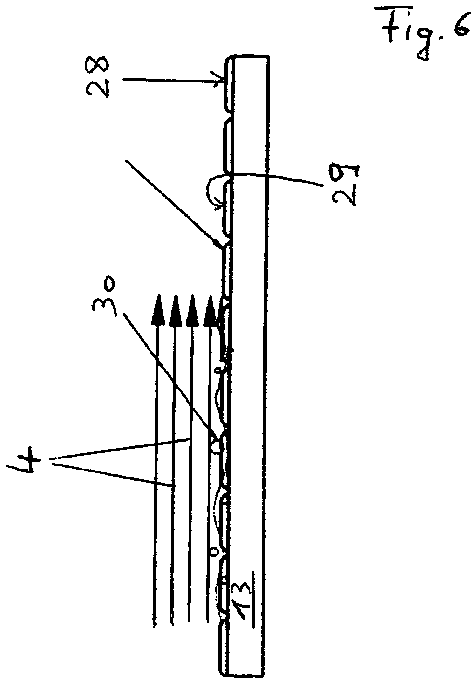

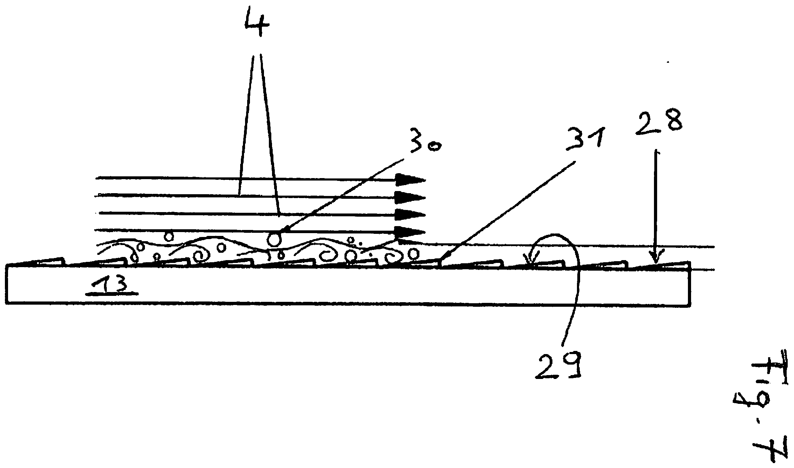

**Fig. 6** **und** **7** zeigen die Strukturen 13 der Fig. 4 und 5 im Querschnitt.

Fig. 6 bezieht sich dabei auf die Fig. 4, während Fig. 7 auf Fig. 5 Bezug nimmt.

In beiden Fig. 6 und 7 ist die Struktur mit der Bezugsziffer 13 gekennzeichnet.

Die Strukturen 13 umfassen jeweils eine Kavitationsoberfläche 28.

An der jeweiligen Kavitationsoberfläche 28 sind in den Fig. 6 und 7 die Mikrokavitationserzeuger 29 dargestellt.

Die Kavitationsblasen sind jeweils mit den Bezugsziffern 30 gekennzeichnet.

Die Mikrokavitationserzeuger 29 der Fig. 7 weisen gegenüber den Mikrokavitationserzeugern 29 der Fig. 6 die Abrisskanten 31 auf.

In der axialen Strömungsrichtung 8 und/oder in der radialen Strömungsrichtung 9 wird der Fluidstrom 4 in Form der Wirbelströmung 10 an der Kavitationsoberfläche 28 der Struktur 13 entlanggeführt.

### Bezugszeichenliste

- 1: Gehäuse
- 2: Zulauf
- 3: Ablauf
- 4: Fluid
- 5: Drallkammer
- 6: Inneres des Gehäuses
- 7: Führungselement
- 8: axiale Strömungsrichtung
- 9: radiale Strömungsrichtung
- 10: Wirbelströmung Fluid
- 11: Wand Drallkammer
- 12: Wand Führungselement
- 13: Struktur
- 14: Außenrand Drallkammer
- 15: Zuführungskanal
- 16: Drallzapfen
- 17: Einrichtung zur Beschleunigung
- 18: frei
- 19: Verengung / Venturi-Düse
- 20: Zuführungskanal
- 21: stromaufwärtiges Ende
- 22: stromabwärtiges Ende
- 23: Diffusor
- 24: Längsachse des Gehäuses
- 25: Durchmesser des Führungselements
- 26: Teller des Führungselements
- 27: Aufnahmeschale
- 28: Kavitationsoberfläche
- 29: Mikrokavitationserzeuger
- 30: Kavitationsblase
- 31: Abrisskante
- 32: Drehachse Fluidstrom
- 33: Drehimpuls
- 34: Überhöhte Seitenwand

## Patentansprüche

1. Vorrichtung zur Reduzierung einer Oberflächenspannung und/oder einer Viskosität eines Fluids mit einem Gehäuse (1)
- das wenigstens einen Zulauf (2) und einen Ablauf (3) für das Fluid aufweist,
- wobei das Gehäuse (1) in seinem Inneren (6) eine vom Fluid (4) durchströmbare Drallkammer (5) aufweist,
- wobei die Drallkammer (5) in einem Hohlraum des Gehäuses (1) zwischen dem Zulauf (2) und dem Ablauf (3) für das Fluid positionierbar ist und
- im Inneren (6) der Drallkammer (5) wenigstens ein Führungselement (7) angeordnet ist, mit dem das Fluid in einem Fluidstrom (4) aus einer axialen Strömungsrichtung (8) in eine radiale Strömungsrichtung (9) überführbar ist, bei der der Fluidstrom (4) einem Drehimpuls (33) um die Drehachse (32) des Fluidstroms (4) aussetzbar ist, wobei
- das Führungselement (7) und/oder die Drallkammer (5) eine, dem Fluidstrom (4) zugewandte Wand aufweist, welche zur Reduzierung einer Oberflächenspannung des Fluids, wenigstens eine Struktur (13) umfasst, welche mindestens eine Abrisskante (31) aufweist, wobei
- zur Aufteilung des Fluidstroms (3) am stromaufwärtigen Ende des Führungselements (7) ein Teilungszapfen angeordnet ist,
- und an einem stromabwärtigen Ende (22) des Führungselements (7) ein Drallzapfen (16) angeordnet ist, der den sich um seine Drehachse (32) drehenden Fluidstrom (4) in der Bildung einer Wirbelströmung (10) unterstützt, wobei
- der Ablauf (3) für das Fluid (4) in Richtung der Strömung des Fluids (4) zumindest bereichsweise verengt (19) ist.

2. Vorrichtung nach Anspruch 1, **dadurch gekennzeichnet, dass** ein Außenrand (14) der Drallkammer (5) zur Führung des Fluidstroms (4) ausgebildet ist.

3. Vorrichtung nach Anspruch 1, **dadurch gekennzeichnet, dass** an die Drallkammer (5) ein Zuführungskanal (20) ankoppelbar ist.

4. Vorrichtung nach Anspruch 1, **dadurch gekennzeichnet, dass** die Drallkammer (5) einen Durchmesser aufweist, der mindestens zweimal dem Durchmesser des Zulaufs (2) entspricht.

5. Vorrichtung nach Anspruch 1, **dadurch gekennzeichnet, dass** das Führungselement (7) einen sich in Strömungsrichtung (8) variierenden Durchmesser aufweist, mit dem der Drehimpuls um die Drehachse (32) des Fluidstroms (4) verstärkbar ist.

6. Vorrichtung nach Anspruch 1, **dadurch gekennzeichnet, dass** das Führungselement (7) tellerförmig ausgebildet ist.

7. Vorrichtung nach Anspruch 1, **dadurch gekennzeichnet, dass** das Führungselement (7) zur Teilung des Fluidstroms (4) ausgebildet ist.

8. Vorrichtung nach Anspruch 1, **dadurch gekennzeichnet, dass** das Führungselement (7) eine innere Auslaufkontur aufweist.

9. Vorrichtung nach Anspruch 1, **dadurch gekennzeichnet, dass** das Führungselement (7) eine äußere Auslaufkontur aufweist.

10. Vorrichtung nach Anspruch 1, **dadurch gekennzeichnet, dass** die Drallkammer (5) und/oder das Führungselement (7) jeweils wenigstens eine, dem Fluid (4) zugewandte Wand (11, 12) aufweist, die wenigstens eine, die Reibung des Fluidstroms (4) gegenüber der Wand (11, 12) verringernde Struktur (13) umfasst.

11. Vorrichtung nach Anspruch 1, **dadurch gekennzeichnet, dass** das Führungselement (7) eine, dem Fluid (4) zugewandte Wand (11) aufweist, die wenigstens eine Abrisskante (31) und/oder wenigstens ein, eine Rauigkeit aufweisendes Element umfasst.

12. Vorrichtung nach Anspruch 1, **dadurch gekennzeichnet, dass** das Führungselement (7) als Kavitationserzeuger ausgebildet ist.

13. Vorrichtung nach Anspruch 1, **dadurch gekennzeichnet, dass** das Führungselement (7) wenigstens eine Einrichtung zur Beschleunigung (17) der radialen Wirbelströmung (10) des Fluids (4) aufweist.

14. Vorrichtung nach Anspruch 1, **dadurch gekennzeichnet, dass** an einer, dem Führungselement (7) zugewandten fluidführenden Wand (11) der Drallkammer (5) wenigstens eine, die Strömungsgeschwindigkeit des Fluidstroms (4) erhöhende Struktur (13) angeordnet ist.

15. Vorrichtung nach Anspruch 1, **dadurch gekennzeichnet, dass** an einer, der Drallkammer (5) zugewandten fluidführenden Wand (12) des Führungselements (7) wenigstens eine, die Strömungsgeschwindigkeit des Fluidstroms (4) erhöhende Struktur (13) angeordnet ist.

16. Vorrichtung nach Anspruch 15, **dadurch gekennzeichnet, dass** durch die Anordnung der die Strömungsgeschwindigkeit des Fluidstroms (4) erhöhenden Struktur (13) an der Wand (11) der Drallkammer (5) und/oder an der Wand (12) des Führungselements (7) eine Kavitationsoberfläche und/oder eine kavitative Grenzschicht ausbildbar ist.

17. Vorrichtung nach Anspruch 1, **dadurch gekennzeichnet, dass** der Ablauf (3) am stromabwärtigen Ende (22) des Führungselements (7) als eine Venturi-Düse (19) ausgebildet ist.

18. Vorrichtung nach Anspruch 1, **dadurch gekennzeichnet, dass** der Ablauf (3) für das Fluid (4) stromabwärts (22) hinter der Drallkammer (5) zur Erhöhung der Strömungsgeschwindigkeit des Fluids (4) verengbar ist.

19. Vorrichtung nach Anspruch 17, **dadurch gekennzeichnet, dass** durch die Anordnung der zumindest bereichsweisen Verengung (19) des Ablaufs (3) stromabwärts (22) hinter der Drallkammer (5) ein Unterdruck in der Wirbelströmung (10) des Fluidstroms (4) erzeugbar ist.

20. Vorrichtung nach Anspruch 17, **dadurch gekennzeichnet, dass** die Verengung (19) in ihrem Durchmesser und/oder in ihrer Länge veränderbar ist.

21. Vorrichtung nach Anspruch 17, **dadurch gekennzeichnet, dass** stromabwärts hinter der Verengung (19) ein Diffusor (23) zur Entspannung der Wirbelströmung (10) angeordnet ist.

22. System zur Reduzierung einer Oberflächenspannung und/oder einer Viskosität eines Fluids (4) mit einem Gehäuse (1)
- das wenigstens einen Zulauf (2) und einen Ablauf (3) für das Fluid (4) aufweist,
- wobei das Gehäuse (1) in seinem Inneren (6) eine vom Fluid (4) durchströmbare Drallkammer (5) aufweist,
- wobei die Drallkammer (5) zwischen dem Zulauf (2) und dem Ablauf (3) für das Fluid (4) positionierbar ist und
- im Inneren (6) der Drallkammer (5) wenigstens ein Führungselement (7) angeordnet ist, mit dem das Fluid in einem Fluidstrom (4) aus einer axialen Strömungsrichtung (8) in eine radiale Strömungsrichtung (9) überführbar ist, bei der der Fluidstrom (4) einem Drehimpuls um die Drehachse (32) des Fluidstroms (4) aussetzbar ist, wobei
- an einem stromabwärtigen Ende (22) des Führungselements (7) ein Drallzapfen (16) angeordnet ist, der den sich um seine Drehachse (32) drehenden Fluidstrom (4) in der Bildung seiner Wirbelströmung (10) unterstützt, wobei
- der Ablauf (3) für das Fluid (4) in Richtung der Strömung des Fluids (4) zumindest bereichsweise verengt (19) ist,
- **dadurch gekennzeichnet, dass** das Führungselement (7) und/oder die Drallkammer (5) eine, dem Fluidstrom (4) zugewandte Wand aufweist, welche zur Reduzierung einer Oberflächenspannung des Fluids, wenigstens eine Struktur (13) umfasst, welche mindestens eine Abrisskante (31) aufweist, wobei
- zur Aufteilung des Fluidstroms (3) am stromaufwärtigen Ende des Führungselements (7) ein Teilungszapfen angeordnet ist.

23. System nach Anspruch 22, **dadurch gekennzeichnet, dass** durch die Anordnung einer die Strömungsgeschwindigkeit des Fluidstroms (4) erhöhenden Struktur (13) an der Wand (11) der Drallkammer (5) und/oder an der Wand (12) des Führungselements (7) eine Kavitationsoberfläche und/oder eine kavitative Grenzschicht ausbildbar ist.

24. Verfahren zur Reduzierung einer Oberflächenspannung und/oder einer Viskosität eines Fluids (4) mit einem Gehäuse (1),
- bei dem das Fluid (4) wenigstens einen Zulauf (2) und einen Ablauf (3) durchströmt,
- bei dem das Fluid (4) eine, im Inneren (6) des Gehäuses (1) angeordnete Drallkammer (5) durchströmt,
- wobei die Drallkammer (5) zwischen dem Zulauf (2) und dem Ablauf (3) für das Fluid (4) positioniert ist, und
- im Inneren (6) der Drallkammer (5) wenigstens ein Führungselement (7) angeordnet ist, mit dem das Fluid in einem Fluidstrom (4) aus einer axialen Strömungsrichtung (8) in eine radiale Strömungsrichtung (9) überführt wird, bei der der Fluidstrom (4) einem Drehimpuls um die Drehachse (32) des Fluidstroms (4) ausgesetzt wird, wobei
- an einem stromabwärtigen Ende (22) des Führungselements (7) ein Drallzapfen (16) angeordnet ist, mit dem der sich um seine Drehachse (32) drehende Fluidstrom (4) bei der Bildung seiner Wirbelströmung (10) unterstützt wird,
- wobei der Ablauf (3) für das Fluid (4) in Richtung der Strömung des Fluids (4) zumindest bereichsweise verengt (19) wird
- **dadurch gekennzeichnet, dass** das Führungselement (7) und/oder die Drallkammer (5) eine, dem Fluidstrom (4) zugewandte Wand aufweist, welche zur Reduzierung einer Oberflächenspannung des Fluids, wenigstens eine Struktur (13) umfasst, welche mindestens eine Abrisskante (31) aufweist, wobei
- zur Aufteilung des Fluidstroms (3) am stromaufwärtigen Ende des Führungselements (7) ein Teilungszapfen angeordnet ist.

25. Verfahren nach Anspruch 24, **dadurch gekennzeichnet, dass** durch die Anordnung der die Strömungsgeschwindigkeit des Fluidstroms (4) erhöhenden Struktur (13) an der Wand (11) der Drallkammer (5) und/oder an der Wand (12) des Führungselements (7) eine Kavitationsoberfläche und/oder eine kavitative Grenzschicht ausgebildet wird.

## Claims

1. A device for reducing a surface tension and/or a viscosity of a fluid by means of a housing (1)
- having at least one inlet (2) and one outlet (3) for the fluid,
- wherein the housing (1), in its interior (6), has a swirl chamber (5) allowing the fluid (4) to flow therethrough,
- wherein the swirl chamber (5) is positionable in a void of the housing (1) between the inlet (2) and the outlet (3) for the fluid, and
- in the interior (6) of the swirl chamber (5), at least one guiding element (7) is arranged, by means of which the fluid in a fluid stream (4) is transferable from an axial flow direction (8) to a radial flow direction (9), in which the fluid stream (4) is exposable to a rotary impulse (33) about the rotation axis (32) of the fluid stream (4), wherein
- the guiding element (7) and/or the swirl chamber (5) have a wall facing the fluid stream (4) which, for reducing a surface tension of the fluid, comprises at least one structure (13) having at a minimum one stall edge (31), wherein
- for partitioning the fluid stream (3), at the upstream end of the guiding element (7), a dividing lug is arranged,
- and at a downstream end (22) of the guiding element (7), a swirl lug (16) is arranged supporting the fluid stream (4) rotating about its rotation axis (32) in forming a turbulent flow (10), wherein
- the outlet (3) for the fluid (4), in the direction of the flow of the fluid (4), is constricted (19) at least in some areas.

2. The device according to claim 1, **characterised in that** an outer rim (14) of the swirl chamber (5) is formed for guiding the fluid stream (4).

3. The device according to claim 1, **characterised in that** a supply channel (20) is couplable to the swirl chamber (5).

4. The device according to claim 1, **characterised in that** the swirl chamber (5) has a diameter corresponding to at a minimum twice the diameter of the inlet (2).

5. The device according to claim 1, **characterised in that** the guiding element (7) has a diameter varying in the flow direction (8), by means of which the rotary impulse about the rotation axis (32) of the fluid stream (4) is enhanceable.

6. The device according to claim 1, **characterised in that** the guiding element (7) is formed having a plate shape.

7. The device according to claim 1, **characterised in that** the guiding element (7) is formed for dividing the fluid stream (4) .

8. The device according to claim 1, **characterised in that** the guiding element (7) has an internal taper contour.

9. The device according to claim 1, **characterised in that** the guiding element (7) has an external taper contour.

10. The device according to claim 1, **characterised in that** the swirl chamber (5) and/or the guiding element (7) have at least one wall (11, 12) facing the fluid (4) comprising at least one structure (13) decreasing the friction of the fluid stream (4) with respect to the wall (11, 12).

11. The device according to claim 1, **characterised in that** the guiding element (7) has a wall (11) facing the fluid (4) comprising at least one stall edge (31) and/or at least one element having a roughness.

12. The device according to claim 1, **characterised in that** the guiding element (7) is formed as a cavitation generator.

13. The device according to claim 1, **characterised in that** the guiding element (7) has at least one apparatus for accelerating (17) the radial turbulent flow (10) of the fluid (4) .

14. The device according to claim 1, **characterised in that** at a fluid-guiding wall (11) of the swirl chamber (5) facing the guiding element (7), at least one structure (13) is arranged increasing the flow velocity of the fluid stream (4).

15. The device according to claim 1, **characterised in that** at a fluid-guiding wall (12) of the guiding element (7) facing the swirl chamber (5), at least one structure (13) is arranged increasing the flow velocity of the fluid stream (4).

16. The device according to claim 15, **characterised in that** by arranging the structure (13) increasing the flow velocity of the fluid stream (4) at the wall (11) of the swirl chamber (5) and/or at the wall (12) of the guiding element (7), a cavitation surface and/or a cavitational boundary layer are formable.

17. The device according to claim 1, **characterised in that** the outlet (3) at the downstream end (22) of the guiding element (7) is formed as a Venturi nozzle (19).

18. The device according to claim 1, **characterised in that** the outlet (3) for the fluid (4) downstream (22) rearward of the swirl chamber (5) is constrictable for increasing the flow velocity of the fluid (4).

19. The device according to claim 17, **characterised in that** by arranging the constriction (19) at least in some areas of the outlet (3) downstream (22) rearward of the swirl chamber (5), a negative pressure is generable in the turbulent flow (10) of the fluid stream (4).

20. The device according to claim 17, **characterised in that** the constriction (19) is changeable in its diameter and/or in its length.

21. The device according to claim 17, **characterised in that** downstream rearward of the constriction (19), a diffuser (23) is arranged for relieving the turbulent flow (10).

22. A system for reducing a surface tension and/or a viscosity of a fluid (4) by means of a housing (1)
- having at least one inlet (2) and one outlet (3) for the fluid (4),
- wherein the housing (1), in its interior (6), has a swirl chamber (5) allowing the fluid (4) to flow therethrough,
- wherein the swirl chamber (5) is positionable between the inlet (2) and the outlet (3) for the fluid (4), and
- in the interior (6) of the swirl chamber (5), at least one guiding element (7) is arranged, by means of which the fluid in a fluid stream (4) is transferable from an axial flow direction (8) to a radial flow direction (9), in which the fluid stream (4) is exposable to a rotary impulse about the rotation axis (32) of the fluid stream (4), wherein
- at a downstream end (22) of the guiding element (7), a swirl lug (16) is arranged supporting the fluid stream (4) rotating about its rotation axis (32) in forming its turbulent flow (10), wherein
- the outlet (3) for the fluid (4), in the direction of the flow of the fluid (4), is constricted (19) at least in some areas,
- **characterised in that** the guiding element (7) and/or the swirl chamber (5) have a wall facing the fluid stream (4) which, for reducing a surface tension of the fluid, comprises at least one structure (13) having at a minimum one stall edge (31), wherein
- for partitioning the fluid stream (3), at the upstream end of the guiding element (7), a dividing lug is arranged.

23. The system according to claim 22, **characterised in that** by arranging a structure (13) increasing the flow velocity of the fluid stream (4) at the wall (11) of the swirl chamber (5) and/or at the wall (12) of the guiding element (7), a cavitation surface and/or a cavitational boundary layer is formable.

24. A method for reducing a surface tension and/or a viscosity of a fluid (4) by means of a housing (1),
- in which the fluid (4) flows through at least one inlet (2) and one outlet (3),
- in which the fluid (4) flows through a swirl chamber (5) arranged in the interior (6) of the housing (1),
- wherein the swirl chamber (5) is positioned between the inlet (2) and the outlet (3) for the fluid (4), and
- in the interior (6) of the swirl chamber (5), at least one guiding element (7) is arranged, by means of which the fluid in a fluid stream (4) is transferred from an axial flow direction (8) to a radial flow direction (9), in which the fluid stream (4) is exposed to a rotary impulse about the rotation axis (32) of the fluid stream (4), wherein
- at a downstream end (22) of the guiding element (7), a swirl lug (16) is arranged, by means of which the fluid stream (4) rotating about its rotation axis (32) is supported when forming its turbulent flow (10),
- wherein the outlet (3) for the fluid (4), in the direction of the flow of the fluid (4), is constricted (19) at least in some areas,
- **characterised in that** the guiding element (7) and/or the swirl chamber (5) have a wall facing the fluid stream (4) which, for reducing a surface tension of the fluid, comprises at least one structure (13) having at a minimum one stall edge (31), wherein
- for partitioning the fluid stream (3), at the upstream end of the guiding element (7), a dividing lug is arranged.

25. The method according to claim 24, **characterised in that** by arranging the structure (13) increasing the flow velocity of the fluid stream (4) at the wall (11) of the swirl chamber (5) and/or at the wall (12) of the guiding element (7), a cavitation surface and/or a cavitational boundary layer are formed.

## Revendications

1. Dispositif de réduction d'une tension de surface et/ou d'une viscosité d'un fluide avec un boîtier (1)
- qui présente au moins une entrée (2) et une sortie (3) pour le fluide,
- le boîtier (1) présentant à l'intérieur (6) une chambre de turbulence (5) traversable par le fluide,
- la chambre de turbulence (5) positionnable dans une cavité du boîtier (1) entre l'entrée (2) et la sortie (3) pour le fluide et
- à l'intérieur (6) de la chambre de turbulence (5) étant disposé au moins un élément de guidage (7), avec lequel le fluide est transférable dans un courant de fluide (4) d'une direction d'écoulement axiale (8) dans une direction d'écoulement radiale (9), dans laquelle le courant de fluide (4) est soumissible à une impulsion de rotation (33) autour de l'axe de rotation (32) du courant de fluide (4),
- l'élément de guidage (7) et/ou la chambre de turbulence (5) présentant une paroi tournée vers le courant de fluide (4), qui comprend au moins une structure (13) pour réduire une tension de surface du fluide, laquelle présente au moins une arête de séparation (31),
- un tourillon de division étant disposé à l'extrémité amont de l'élément de guidage (7) pour diviser le courant de fluide (3),
- et un tourillon de turbulence (16) étant disposé à une extrémité aval (22) de l'élément de guidage (7), lequel assiste le courant de fluide (4) tournant autour de son axe de rotation (32) dans la formation d'un écoulement turbulent (10),
- la sortie (3) pour le fluide (4) étant rétrécie (19) au moins par zones dans le sens de l'écoulement du fluide (4).

2. Dispositif selon la revendication 1, **caractérisé en ce qu'**un bord extérieur (14) de la chambre de turbulence (5) est conçu pour guider le courant de fluide (4).

3. Dispositif selon la revendication 1, **caractérisé en ce qu'**un canal d'alimentation (20) est couplable à la chambre de turbulence (5).

4. Dispositif selon la revendication 1, **caractérisé en ce que** la chambre de turbulence (5) présente un diamètre qui correspond au moins au double du diamètre de l'entrée (2).

5. Dispositif selon la revendication 1, **caractérisé en ce que** l'élément de guidage (7) présente un diamètre qui varie dans la direction d'écoulement (8), avec lequel l'impulsion de rotation autour de l'axe de rotation (32) du courant de fluide (4) est amplifiable.

6. Dispositif selon la revendication 1, **caractérisé en ce que** l'élément de guidage (7) a la forme d'une assiette.

7. Dispositif selon la revendication 1, **caractérisé en ce que** l'élément de guidage (7) est conçu pour diviser le courant de fluide (4).

8. Dispositif selon la revendication 1, **caractérisé en ce que** l'élément de guidage (7) présente un contour de sortie intérieur.

9. Dispositif selon la revendication 1, **caractérisé en ce que** l'élément de guidage (7) présente un contour de sortie extérieur.

10. Dispositif selon la revendication 1, **caractérisé en ce que** la chambre de turbulence (5) et/ou l'élément de guidage (7) présentent chacun au moins une paroi (11, 12) orientée vers le fluide (4), qui comprend au moins une structure (13) réduisant le frottement du courant de fluide (4) par rapport à la paroi (11, 12).

11. Dispositif selon la revendication 1, **caractérisé en ce que** l'élément de guidage (7) présente une paroi (11) orientée vers le fluide (4), qui comprend au moins une arête de séparation (31) et/ou au moins un élément présentant une rugosité.

12. Dispositif selon la revendication 1, **caractérisé en ce que** l'élément de guidage (7) est conçu comme un générateur de cavitation.

13. Dispositif selon la revendication 1, **caractérisé en ce que** l'élément de guidage (7) présente au moins un dispositif d'accélération (17) de l'écoulement turbulent radial (10) du fluide (4).

14. Dispositif selon la revendication 1, **caractérisé en ce qu'**au moins une structure (13) augmentant la vitesse d'écoulement du courant de fluide (4) est disposée sur une paroi (11) de la chambre de turbulence (5) conduisant du fluide et tournée vers l'élément de guidage (7).

15. Dispositif selon la revendication 1, **caractérisé en ce qu'**au moins une structure (13) augmentant la vitesse d'écoulement du courant de fluide (4) est disposée sur une paroi (12) de l'élément de guidage (7) conduisant du fluide et tournée vers la chambre de turbulence (5).

16. Dispositif selon la revendication 15, **caractérisé en ce qu'**une surface de cavitation et/ou une couche limite de cavitation sont formables par l'agencement de la structure (13) augmentant la vitesse d'écoulement du courant de fluide (4) sur la paroi (11) de la chambre de turbulence (5) et/ou sur la paroi (12) de l'élément de guidage (7).

17. Dispositif selon la revendication 1, **caractérisé en ce que** l'écoulement (3) à l'extrémité aval (22) de l'élément de guidage (7) est conçu comme une buse Venturi (19).

18. Dispositif selon la revendication 1, **caractérisé en ce que** la sortie (3) pour le fluide (4) est rétrécissable en aval (22) de la chambre de turbulence (5) pour augmenter la vitesse d'écoulement du fluide (4).

19. Dispositif selon la revendication 17, **caractérisé en ce que** l'agencement du rétrécissement (19) au moins par zones de la sortie (3) en aval (22) de la chambre de turbulence (5) permet de générer une dépression dans l'écoulement turbulent (10) du courant de fluide (4).

20. Dispositif selon la revendication 17, **caractérisé en ce que** le diamètre et/ou la longueur du rétrécissement (19) sont variables.

21. Dispositif selon la revendication 17, **caractérisé en ce qu'**en aval du rétrécissement (19) est disposé un diffuseur (23) pour la détente de l'écoulement turbulent (10).

22. Système de réduction d'une tension de surface et/ou d'une viscosité d'un fluide (4) avec un boîtier (1)
- qui présente au moins une entrée (2) et une sortie (3) pour le fluide (4),
- le boîtier (1) présentant à l'intérieur (6) une chambre de turbulence (5) traversable par le fluide,
- la chambre de turbulence (5) est positionnable entre l'entrée (2) et la sortie (3) pour le fluide (4) et
- à l'intérieur (6) de la chambre de turbulence (5) étant disposé au moins un élément de guidage (7), avec lequel le fluide dans un courant de fluide (4) est transférable d'une direction d'écoulement axiale (8) dans une direction d'écoulement radiale (9), dans laquelle le courant de fluide (4) est soumissible à une impulsion de rotation autour de l'axe de rotation (32) du courant de fluide (4),
- un tourillon de turbulence (16) étant disposé à une extrémité aval (22) de l'élément de guidage (7), lequel assiste le courant de fluide (4) tournant autour de son axe de rotation (32) dans la formation de son écoulement turbulent (10),
- la sortie (3) pour le fluide (4) étant rétrécie (19) au moins par zones dans le sens de l'écoulement du fluide (4),
- **caractérisé en ce que** l'élément de guidage (7) et/ou la chambre de turbulence (5) présentent une paroi tournée vers le courant de fluide (4), qui comprend au moins une structure (13) pour réduire une tension de surface du fluide, laquelle présente au moins une arête de séparation (31),
- un tourillon de division étant disposé à l'extrémité amont de l'élément de guidage (7) pour diviser le courant de fluide (3).

23. Système selon la revendication 22, **caractérisé en ce qu'**une surface de cavitation et/ou une couche limite de cavitation sont formables par l'agencement d'une structure (13) augmentant la vitesse d'écoulement du courant de fluide (4) sur la paroi (11) de la chambre de turbulence (5) et/ou sur la paroi (12) de l'élément de guidage (7).

24. Procédé de réduction d'une tension de surface et/ou d'une viscosité d'un fluide (4) avec un boîtier (1),
- dans lequel le fluide (4) s'écoule au moins à travers une entrée (2) et une sortie (3),
- dans lequel le fluide (4) s'écoule à travers une chambre de turbulence (5) disposée à l'intérieur (6) du boîtier (1),
- la chambre de turbulence (5) étant positionnée entre l'entrée (2) et la sortie (3) pour le fluide (4) et
- à l'intérieur (6) de la chambre de turbulence (5) étant disposé au moins un élément de guidage (7), avec lequel le fluide dans un courant de fluide (4) est transféré d'une direction d'écoulement axiale (8) dans une direction d'écoulement radiale (9), dans laquelle le courant de fluide (4) est soumis à une impulsion de rotation autour de l'axe de rotation (32) du courant de fluide (4),
- un tourillon de turbulence (16) étant disposé à une extrémité aval (22) de l'élément de guidage (7), avec lequel le courant de fluide (4) tournant autour de son axe de rotation (32) est assisté lors de la formation de son écoulement turbulent (10),
- la sortie (3) pour le fluide (4) étant rétrécie (19) au moins par zones dans le sens de l'écoulement du fluide (4),
- **caractérisé en ce que** l'élément de guidage (7) et/ou la chambre de turbulence (5) présentent une paroi tournée vers le courant de fluide (4), qui comprend au moins une structure (13) pour réduire une tension de surface du fluide, laquelle présente au moins une arête de séparation (31) ,
- un tourillon de division étant disposé à l'extrémité amont de l'élément de guidage (7) pour diviser le courant de fluide (3).

25. Procédé selon la revendication 24, **caractérisé en ce qu'**une surface de cavitation et/ou une couche limite de cavitation sont formées par l'agencement de la structure (13) augmentant la vitesse d'écoulement du courant de fluide (4) sur la paroi (11) de la chambre de turbulence (5) et/ou sur la paroi (12) de l'élément de guidage (7).
